(19) Europäisches Patentamt
European Patent Office
Office européen des brevets

(11) **EP 3 961 447 B1**

(12) **EUROPÄISCHE PATENTSCHRIFT**

(45) Veröffentlichungstag und Bekanntmachung des Hinweises auf die Patenterteilung:
**21.12.2022 Patentblatt 2022/51**

(21) Anmeldenummer: **21191583.0**

(22) Anmeldetag: **17.08.2021**

(51) Internationale Patentklassifikation (IPC):
**G06F 21/55** (2013.01)    **G06F 21/57** (2013.01)
**G06F 40/205** (2020.01)

(52) Gemeinsame Patentklassifikation (CPC):
**G06F 21/577; G06F 21/552; G06F 40/186; G06F 40/205**

(54) **VERFAHREN ZUR DETEKTION VON ANOMALEN BETRIEBSZUSTÄNDEN EINES COMPUTERSYSTEMS**

METHOD FOR DETECTING ABNORMAL OPERATING STATES OF A COMPUTER SYSTEM

PROCÉDÉ DE DÉTECTION DES ÉTATS DE FONCTIONNEMENT ANORMALES D'UN SYSTÈME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.09.2020 AT 507412020**

(43) Veröffentlichungstag der Anmeldung:
**02.03.2022 Patentblatt 2022/09**

(73) Patentinhaber: **AIT Austrian Institute of Technology GmbH**
**1210 Wien (AT)**

(72) Erfinder:
• **HÖDL, Georg**
  **3500 Krems (AT)**
• **LANDAUER, Max**
  **1070 Wien (AT)**
• **WURZENBERGER, Markus**
  **1090 Wien (AT)**
• **SKOPIK, Florian**
  **2000 Stockerau (AT)**

(74) Vertreter: **Wildhack & Jellinek**
**Patentanwälte OG**
**Landstraßer Hauptstraße 50**
**1030 Wien (AT)**

(56) Entgegenhaltungen:
• **LANDAUER MAX ET AL: "System log clustering approaches for cyber security applications: A survey", COMPUTERS & SECURITY, ELSEVIER SCIENCE PUBLISHERS. AMSTERDAM, NL, Bd. 92, 31. Januar 2020 (2020-01-31), XP086115448, ISSN: 0167-4048, DOI: 10.1016/J.COSE.2020.101739 [gefunden am 2020-01-31]**
• **GENGA LAURA ET AL: "Subgraph Mining for Anomalous Pattern Discovery in Event Logs", 2. Juli 2017 (2017-07-02), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 181 - 197, XP047419425, ISBN: 978-3-540-74549-5 [gefunden am 2017-07-02] * Seite 186 - Seite 190 ***
• **WURZENBERGER MARKUS ET AL: "AECID-PG: A Tree-Based Log Parser Generator To Enable Log Analysis", 2019 IFIP/IEEE SYMPOSIUM ON INTEGRATED NETWORK AND SERVICE MANAGEMENT (IM), IFIP, 8. April 2019 (2019-04-08), Seiten 7-12, XP033552166, [gefunden am 2019-05-16]**

**Beschreibung**

Die Erfindung betrifft ein Verfahren zur Detektion von anomalen Betriebszuständen eines Computersystems gemäß dem Oberbegriff von Patentanspruch 1.

Aus dem Stand der Technik ist bekannt, Protokolldateien, die von unterschiedlichen Prozessen erstellt werden, daraufhin zu untersuchen, ob die in den Protokolldateien beschriebenen Vorgänge einen anomalen Zustand der Prozesse bzw. des Computernetzwerks darstellen, in dem diese Prozesse ablaufen.

Bei den vorstehend genannten Verfahren bestehen wesentliche Probleme, die Werte der üblicherweise in für Menschen lesbarer Form geschriebenen Protokolldateien auf bestimmte Muster hin zu analysieren, um somit Betriebszustände zu erkennen, die ungewöhnlich oder einzigartig sind und auf anomale Betriebszustände hindeuten.

Solche Vorgehensweisen ermöglichen grundsätzlich das Auffinden von anomalen Zuständen in einem Computernetzwerk, sind jedoch relativ komplex und erfordern es, die Werte der Token auf Muster zu analysieren und anschließend neue Protokolldateien auf die gefundenen Muster hin zu analysieren, was insgesamt zu einem erhöhten Ressourcenbedarf der Protokolldatenanalyse führt. Aus dem Stand der Technik sind jedoch keine konkreten Verfahren bekannt, die versuchen, die Werte aller Token der Protokollzeilen gleichzeitig auf Muster hin zu analysieren. LANDAUER MAX ET AL: "System log clustering approaches for cyber security applications: A survey",COMPUTERS & SECURITY, ELSEVIER SCIENCE PUBLISHERS. AMSTERDAM, NL, Bd. 92, 31. Januar 2020 (2020-01-31), ISSN: 0167-4048, DOI: 10.1016/J.COSE.2020.101739, offenbart ein Verfahren zur Detektion von anomalen Betriebszuständen eines Computersystems.

Aufgabe der Erfindung ist es daher, diese Probleme zu lösen und ein Verfahren zur Detektion von anomalen Betriebszuständen eines Computersystems zur Verfügung zu stellen, mit dem eine rasche und effiziente Untersuchung von, vom Computersystem erstellten, Protokollzeilen ermöglicht wird, sodass Anomalien im Verhalten des Computersystems zuverlässig und ressourcensparend detektiert werden können.

Die Erfindung löst diese Aufgabe bei einem Verfahren zur Detektion von anomalen Betriebszuständen eines Computersystems,

-   wobei während des Betriebs des Computers oder von auf dem Computer ablaufenden Prozessen, Protokolle erstellt werden, indem bei Auftreten vorgegebener Ereignisse für jedes dieser Ereignisse jeweils eine Protokollzeile in Form einer Zeichenabfolge erstellt wird, wobei der Aufbau der Protokollzeile einer vom jeweiligen Computer und/oder Prozess vorgegebenen Syntax entspricht,
-   wobei die einzelnen Protokollzeilen an vorgegebenen Trennzeichen in Teilzeichenabfolgen unterteilt werden,
-   wobei den einzelnen Protokollzeilen basierend auf deren Syntax, insbesondere aufgrund der Ähnlichkeit der einzelnen Protokollzeilen zueinander und aufgrund der die Protokollzeilen aufbauenden Teilzeichenabfolgen, jeweils zumindest ein Ereignistyp zugewiesen wird,
-   wobei für jeden Ereignistyp ein Template umfassend eine Anzahl von Teilzeichenabfolgen der Protokollzeilen des jeweiligen Ereignistyp repräsentierenden Token, erstellt wird,

    -   wobei das Template die Struktur der einem jeweiligen Ereignistyp zugeordneten Protokollzeilen beschreibt, und
    -   wobei das Template eine Anzahl von Token mit statischem Inhalt, insbesondere statischen Werten, umfasst, die in ihrer Reihenfolge in ausgewählten, insbesondere allen, Protokollzeilen des jeweiligen Ereignistyps vorhanden sind, und wobei die Token mit statischem Inhalt des Templates durch Token mit variablem Inhalt, insbesondere variablen Werten, unterbrochen werden,
    -   wobei das Template eine Anzahl von Token aufweist, deren Inhalt, insbesondere deren Werte, einen diskreten Datentyp aufweisen, und

-   wobei die Protokollzeilen und deren Teilzeichenabfolgen charakteristisch für den Betriebszustand des Computersystems sind.

Erfindungsgemäß ist dabei vorgesehen,

-   dass in einer Initialisierungsphase

    -   auf Grundlage einer Stichprobe umfassend eine Anzahl an Protokollzeilen des jeweiligen Ereignistyps Tokenpaare umfassend einen ersten Token und einen zweiten Token aus den, den diskreten Datentyp aufweisende, Token des Templates eines jeweiligen Ereignistyps gebildet werden,
        wobei als Werte des jeweiligen Tokens jeweils diejenigen Teilzeichenabfolgen der Protokollzeilen der Stichprobe ermittelt werden, die den einzelnen Token der Tokenpaare zugehörig sind, und
    -   für alle Tokenpaare und jeden angenommenen Wert des ersten Tokens des Tokenpaares jeweils eine Korrelation ermittelt wird, indem die bedingten Verteilungen dafür berechnet werden, dass bei Auftreten des jeweiligen Werts im ersten Token des Tokenpaares, ein jeweiliger Wert im zweiten Token des Tokenpaares auftritt, und

- dass anschließend in einer Testphase

  - wiederholt, sobald eine Abfolge, insbesondere eine vorgegebene Anzahl, neu erstellter Protokollzeilen eines jeweiligen Ereignistyps erstellt wurde, mittels eines Tests auf Homogenität getestet wird, ob die aufgefundenen Korrelationen erfüllt sind, indem jeweils für alle Werte des ersten Tokens eines jeweiligen Tokenpaares überprüft wird, ob bei denjenigen neu erstellten Protokollzeilen, bei denen der jeweilige Wert im ersten Token auftritt, die Werte des zweiten Tokens den berechneten bedingten Verteilungen der jeweiligen ermittelten Korrelation folgen und
  - ein anomaler Betriebszustand des Computersystems erkannt wird, wenn, insbesondere wiederholt, festgestellt wird, dass die Werte der Token zumindest einer der ermittelten Korrelationen nicht den jeweils berechneten bedingten Verteilungen folgen.

Mit dieser Vorgehensweise ist es besonders zuverlässig möglich, die Muster der angenommenen Werte der Teilzeichenabfolgen der Protokollzeilen der üblicherweise, d.h. im Fall, dass keine Angriffe oder Veränderungen des Computersystems vorliegen, auf dem Computersystem erstellten Protokollzeilen, zu identifizieren, sodass besonders rasch und zuverlässig neu erstellte Protokollzeilen darauf überprüft werden können, ob diese dem Muster entsprechen und im Falle des nicht Entsprechens als Anomalien des Computersystems erkannt werden.

Dadurch, dass nur Token analysiert werden, welche diskrete Werte annehmen, d.h., deren Werte kategorisch sind und sich dadurch auszeichnen, dass die Auswahl der angenommenen Werte aus einer begrenzten Menge entstammt, können besonders einfache und rechenleistungssparende Verfahren für die Detektion von Mustern und darauf aufbauend von anomalen Betriebszuständen herangezogen werden.

Im Folgenden wird unter einer Protokolldatei eine Datei verstanden, welche eine sequenzielle zeilenweise Aufzeichnung von Ereignissen des Betriebssystems, oder eines Programmes beinhaltet. Diese Aufzeichnungen können Anmerkungen, Warnungen, System- oder Fehlermeldungen der Prozesse, die auf dem System ablaufen, beschreiben. Abhängig davon welche Prozesse in der Protokolldatei protokolliert werden, können sich die Protokollzeilen stark in ihrer Struktur, ihrem Inhalt und ihrem Detailgrad unterscheiden.

Protokollzeilen werden von Programmen erstellt, welche Protokollnachrichten, die einer gewissen Syntax entsprechend aufgebaut sind, ausgeben. Die Syntax ist hierbei im Hinblick auf den Aufbau der Protokollzeile, vergleichbar mit dem Satzbau in der Sprache, zu verstehen, wobei die Syntax das Zusammenfügen von Wörtern bzw. Wortgruppen zu ganzen Protokollzeilen, bzw. Sätzen, beschreibt. Es sind daher Teilzeichenabfolgen, die durch vorgegebene Trennzeichen (Separatoren), wie zum Beispiel Leerzeichen, Kommas und Strichpunkte, voneinander getrennt werden.

Basierend auf dieser Syntax können Protokollzeilen in verschiedene Klassen eingeteilt werden. Protokollzeilen einer bestimmten Klasse unterscheiden sich nur an den Stellen, an denen variable Zeichenabfolgen eingefügt wurden. Diese Klassen werden auch als Ereignistypen bezeichnet. Zu den Ereignistypen können Templates, bestehend aus Token, erstellt werden.

Token bezeichnen Teilzeichenabfolgen einer Protokollzeile, die durch Separieren der Zeichenkette an vorgegebenen Trennzeichen, wie zum Beispiel Leerzeichen oder Beistrichen entstehen. Jeder Ereignistyp lässt sich daher durch ein Muster, bestehend aus einer Abfolge von Token, beschreiben. Diese Muster/Repräsentanten bestehen aus Token mit statischem Text, der in allen Protokollzeilen, die dem Ereignistyp entsprechen an derselben Stelle steht, und aus Token, die durch sogenannte Wildcards gekennzeichnet sind, die an Stellen eingefügt werden an denen die Zeilen variable Teilzeichenabfolgen beinhalten. Die Stellen mit variablen Zeichenketten werden auch als variable Token bezeichnet.

Im Folgenden werden die Begriffe "Token des Templates zu einem Ereignistyp" und "Token eines Ereignistyps" synonym verwendet.

Im Folgenden wird die betrachtete Abfolge von Protokollzeilen als Stichprobe bezeichnet. Die Werte eines Tokens bezeichnen die Teilzeichenabfolgen der Protokollzeilen der Stichprobe zu diesem Token, d.h., die Teilzeichenabfolgen, welche die Stichprobe im betreffenden Token annimmt. Im Folgenden wird unter einem "Wert eines Tokens" also eine Teilzeichenabfolge einer Protokollzeile zu diesem Token verstanden.

Im Folgenden wird unter dem Datentyp eines Tokens eine Beschreibung der erwarteten Eigenschaften der Werte des Tokens verstanden. Dieser kann z.B. erkannt werden, indem getestet wird, ob die Werte des jeweiligen Tokens die Eigenschaften der Datentypen besitzen. Im Folgenden ist unter dem Datentyp "diskret" zu verstehen, dass die Werte eines Tokens einer diskreten Verteilung folgen.

Im Folgenden wird unter der bedingten Verteilung $p_{T_2,T_1}(w_2\,|w_1)$, d.h. einer "durch einen Wert $w_1$ des ersten Tokens $T_1$ bedingten Verteilung der Werte $w_2$ des zweiten Tokens $T_2$", jene Verteilung der Werte $w_2$ des zweiten Token $T_2$ des jeweiligen Tokenpaares verstanden, welche durch die nachfolgende Verteilung der einzelnen Werte $w_2$ des

zweiten Token $T_2$ definiert wird

$$p_{T_2,T_1}(w_2|w_1) = P(T_2 = w_2|T_1 = w_1) = \frac{P(\{T_1 = w_1\} \cap \{T_2 = w_2\})}{P(T_1 = w_1)}$$

wobei $w_1$ ein Wert des jeweils ersten Tokens $T_1$ des jeweiligen Tokenpaares, $w_2$ ein Wert des zweiten Tokens $T_2$ des Tokenpaares und P die jeweilige Wahrscheinlichkeit ist.

Diese Definition ist analog zu der Definition der bedingten Verteilung in Park, K. I., & Park. (2018). Fundamentals of Probability and Stochastic Processes with Applications to Communications. Springer International Publishing.

Die Bezeichnung bzw. Indizierung eines Werts eines ersten Tokens mit w"$_1$" bzw. T"$_1$" und eines Werts eines zweiten Tokens mit w"$_2$" bzw. T"$_2$" ist jedoch exemplarisch zu verstehen. Die angegebene Definition einer "bedingten Verteilung" wird im Folgenden analog auf Tokenpaare verschiedenster Token angewendet, wobei aus dem Kontext jeweils hervorgeht um welche Token und welchen Wert des jeweils ersten Tokens des Tokenpaares es sich handelt.

Im Folgenden wird unter dem normalen Betriebszustand eines Computersystems verstanden, dass das System bei gleichbleibenden Nutzerverhalten, äußeren Einflüssen und ohne Manipulation der intern ablaufenden Prozesse ausgeführt wird. Da Protokolldateien Informationen über Ereignisse und Abläufe von Prozessen eines Systems enthalten, können diese dazu genutzt werden, um Muster im Auftreten und in den Eigenschaften der Ereignisse zu finden. Muster können entdeckt werden, indem Protokolldateien, welche während eines normalen Betriebszustandes entstanden sind, über längere Zeit hinweg analysiert werden. Die Art von Mustern, welche in diesem Patent betrachtet werden, sind Muster in den Werten der Token der Ereignistypen. Dazu werden die Werte der Token verglichen und überprüft ob diese gewisse Eigenschaften besitzen. Unter normalem Betriebszustand treten diese Muster in den neu erzeugten Protokolldateien wieder auf, sodass man von einem Abweichen vom normalen Systemverhaltens spricht, sollte das Muster nicht mehr in neu erzeugten Protokollzeilen fortgeführt werden.

Im Folgenden wird unter Korrelationen zwischen Werten von zwei Token eines Ereignistyps eine spezielle Art von Mustern in Protokolldaten verstanden. Eine Korrelation zwischen zwei Token liegt vor, wenn während einer Beobachtung der angenommene Wert eines Tokens den Wert des anderen Tokens mitbestimmt, oder beeinflusst. Korrelationen können dabei Beziehungen sein, die nur in eine Richtung oder auch in beide Richtungen wirken, d.h., dass, sobald eine Korrelation in eine Richtung vorhanden ist, auch in die andere Richtung ein Einfluss besteht. Um Unterscheidungen in der Verarbeitung von Korrelationen, welche in eine oder in beide Richtungen wirken, zu vermeiden, werden Korrelationen, die in beide Richtungen wirken, als zwei Korrelationen betrachtet, die jeweils in eine Richtung wirken. Im Folgenden werden daher nur noch Korrelationen in eine Richtung verarbeitet, jedoch ohne, dass Korrelationen verloren gehen. Im Folgenden wird derjenige Token, dessen Werte Einfluss auf die Werte eines anderen Tokens besitzen, als der erste Token bezeichnet und derjenige Token, dessen Wert beeinflusst wird, als der zweite Token. Im Folgenden wird die Verteilung der Werte des zweiten Tokens, wenn der erste Token einen gewissen Wert annimmt, die durch diesen Wert bedingte Verteilung genannt.

Im Folgenden wird unter einem anomalen Betriebszustand eines Computersystems ein Zustand des Computersystems verstanden, der nicht der normalen Benutzung des Systems entspricht. Dies kann aus einer Veränderung des Nutzerverhaltens, Änderungen äußerer Einflüsse und/oder einer Manipulation der intern ablaufenden Prozesse entstehen. Da Systeme unter anomalen Betriebszuständen i.d.R. eine Änderung in der Abfolge und Eigenschaften der Ereignisse verursachen, kann dies auch in den Protokolldateien erkannt werden. Eine mögliche Ausprägung dieser Veränderungen ist es, dass die im Abschnitt zum normalen Betriebszustand beschriebenen Muster, nicht mehr in neu erstellten Protokollzeilen vorhanden sind. Da Protokollzeilen, welche unter normalem Betriebszustand generiert wurden diesen Mustern folgen, kann im Umkehrschluss ein anomaler Betriebszustand erkannt werden, wenn das Muster in neu erzeugten Protokollzeilen nicht fortgeführt wird. Die Protokollzeilen, welche von den Mustern des normalen Betriebszustandes abweichen, werden auch Anomalien genannt.

Bei einer vorteilhaften Variante eines erfindungsgemäßen Verfahrens kann vorgesehen sein, dass in der Testphase der Chiquadrattest auf Homogenität als Test auf Homogenität verwendet wird. Ein Beispiel eines derartigen Chiquadrattests auf Homogenität ist z.B. beschrieben in Bolboacă, S. D., Jäntschi, L., Sestraᵗraş, A. F., Sestra͘aş, R. E., & Pamfil, D. C. (2011). Pearson-Fisher chi-square statistic revisited. Information, 2(3), 528-545.

Zur weiteren Einsparung von Rechenzeit und -leistung kann vorgesehen sein, dass bei der Bildung der Tokenpaare, die Verteilungen der einzelnen Werte aller Token ermittelt werden und jeweils nur Tokenpaare aus Token gebildet werden, deren Werte eine ähnliche Verteilung aufweisen. Die Überprüfung, ob die Verteilungen ähnlich sind, entspricht einem Test auf Homogenität und kann insbesondere mit einem Chiquadrat Test gelöst werden.

Um die Anzahl der zu überprüfenden Korrelationen zu reduzieren und derart weiter Zeit und Rechenleistung zu sparen, kann vorgesehen sein,

- dass bei der Bildung der Tokenpaare zu jedem Token eine Wertemenge ermittelt wird, wobei die Wertemenge als Werte diejenigen Teilzeichenabfolgen der Protokollzeilen der Stichprobe umfasst, die dem jeweiligen Token zugehörig sind, und
- dass jeweils nur Token gepaart werden, bei denen die Werte der jeweiligen Wertemengen einander, insbesondere zu einem vorgegebenen Prozentsatz, überschneiden.

Eine weitere Einsparung von Rechenzeit und -leistung kann erzielt werden, wenn bei der Bildung der Tokenpaare nur Token berücksichtigt werden, bei denen die Auftrittswahrscheinlichkeit des häufigsten Werts, den diejenigen Teilzeichenabfolgen der Protokollzeilen in der Stichprobe annehmen, die dem jeweiligen Token zugehörig sind, einen vorgegebenen Schwellwert überschreitet.

Um zufällige entstandene Korrelationen zwischen zwei Token, die auf keinem tatsächlich existierenden Zusammenhang zwischen den Werten der Token beruhen, besonders effektiv von einer weiteren Überprüfung auszuschließen, kann vorgesehen sein,

- dass in der Initialisierungsphase die einzelnen ermittelten Korrelationen zu den einzelnen Tokenpaaren in einem Überprüfungsschritt dahingehend überprüft werden, ob die jeweils ermittelten Korrelationen vorgegebene Bedingungen erfüllen, welche einem Test entsprechen, ob die einzelnen ermittelten Korrelationen nicht zufällig sind, und
- dass in der Testphase nur diejenigen ermittelten Korrelationen berücksichtigt werden, die diese vorgegebenen Bedingungen erfüllen, indem sie in der jeweiligen Überprüfung als nicht zufällig erkannt werden.

Um zufällig entstandene Korrelationen zwischen Token besonders effektiv von einer weiteren Überprüfung auszuschließen, kann weiters vorgesehen sein, dass, im Fall, dass im Überprüfungsschritt mehrere verschiedene Überprüfungen der Korrelationen hintereinander vorgenommen werden, nur diejenigen Korrelationen in der Testphase berücksichtigt werden, die in zumindest einer Überprüfung, insbesondere allen Überprüfungen, als nicht zufällig erkannt wurden.

Gemäß einer besonders vorteilhaften Variante eines erfindungsgemäßen Verfahrens kann weiters vorgesehen sein,

- dass im Überprüfungsschritt die Korrelationen überprüft werden, indem mittels eines goodness of fit-Tests getestet wird, ob die angenommenen Werte des zweiten Tokens, des jeweiligen Tokenpaares in den Protokollzeilen der Stichprobe welche dem der Korrelation zugehörigen Wert im ersten Token besitzen, aus der Multinomialverteilung entstammen, in denen das Auftreten aller Werte gleich wahrscheinlich ist und
- dass die jeweilige Korrelation diese Überprüfung bestanden hat und als nicht zufällig erkannt wird, wenn der goodness of fit-Test negativ ist.

Ein Beispiel eines derartigen goodness of fit-Tests ist beispielsweise beschrieben in Zhang, J. (2002). Powerful goodness-of-fit tests based on the likelihood ratio. Journal of the Royal Statistical Society: Series B (Statistical Methodology), 64(2), 281-294. Die Multinomialverteilung ist beispielsweise beschrieben in: Epitropakis, M. G., Tasoulis, D. K., Pavlidis, N. G., Plagianakos, V. P., & Vrahatis, M. N. (2012, May). Tracking differential evolution algorithms: An adaptive approach through multinomial distribution tracking with exponential forgetting. In Hellenic Conference on Artificial Intelligence (pp. 214-222). Springer, Berlin, Heidelberg.

Gemäß einer besonders vorteilhaften Variante eines erfindungsgemäßen Verfahrens kann weiters vorgesehen sein,

- dass im Überprüfungsschritt zu den Korrelationen eines Tokenpaares jeweils die bedingten Verteilungen der Werte, die der zweite Token des jeweiligen Tokenpaares in der Stichprobe annimmt, zu den Korrelationen eines Tokenpaares, mittels eines Tests auf Homogenität, überprüft werden, ob diese derselben Verteilung angehören, und
- dass, sollte der Test auf Homogenität positiv ausfallen, alle Korrelationen dieses Tokenpaares die Überprüfung nicht bestanden haben und als zufällig erkannt werden.

Ein derartiger Test auf Homogenität ist z.B. beschrieben in: Kusolitsch, N. (2014). Maß- und Wahrscheinlichkeitstheorie: Eine Einführung. Springer-Verlag.

Gemäß einer besonders vorteilhaften Variante eines erfindungsgemäßen Verfahrens kann weiters vorgesehen sein,

- dass im Überprüfungsschritt die Korrelationen überprüft werden, indem

  - die Häufigkeiten der Werte des ersten Tokens des Tokenpaares ermittelt werden und

- die Häufigkeiten derjenigen Werte des ersten Tokens aggregiert, insbesondere summiert, werden, für welche Korrelationen ermittelt wurden, und

- dass alle Korrelationen die Überprüfung nicht bestanden haben und als zufällig erkannt werden, wenn der derart berechnete aggregierte Wert, insbesondere die derart berechnete Summe, einen vorgegebenen Schwellenwert unterschreitet.

Für eine besonders effiziente Aktualisierung der Korrelationen basierend auf neu erstellten Protokollzeilen kann vorgesehen sein, dass in der Testphase zum Testen der Korrelationen die Korrelationen, insbesondere nur dann wenn das Testresultat positiv war, aktualisiert werden, indem für die Korrelationen die bedingten Verteilungen, die auf Basis der jeweiligen Stichprobe festgelegt wurden, auf Basis dieser Stichprobe zuzüglich der Stichprobe dieses Updateschrittes festgelegt werden.

Gemäß einer besonders vorteilhaften Variante eines erfindungsgemäßen Verfahrens kann in diesem Zusammenhang weiters vorgesehen sein, dass, insbesondere mittels eines Binomialtests, ermittelt wird, ob sich die negativen Testresultate einer jeweiligen Korrelation häufen und im Anschluss diese Korrelation verworfen wird, sofern dies der Fall ist.

Ein Beispiel eines derartigen Binomialtests ist z.B. beschrieben in Henze, N. (1997). Stochastik für Einsteiger (Vol. 8). Vieweg.

Gemäß einer besonders vorteilhaften Variante eines erfindungsgemäßen Verfahrens kann in diesem Zusammenhang weiters vorgesehen sein, dass neue Korrelationen gesucht werden, indem in der Testphase, insbesondere regelmäßig, einzelne Tokenpaare, für die zuvor keine Korrelationen gefunden wurden, oder deren Korrelationen verworfen wurden, einer neuerlichen Initialisierungsphase unterworfen werden, und dass die derart aufgefundenen neuen Korrelationen anschließend in der Testphase getestet werden.

Eine besonders zuverlässige Identifikation von anomalen Betriebszuständen kann erzielt werden, wenn zu den einzelnen Korrelationen, basierend auf einem Vergleich eines Abschnittes einer Liste der letzten Testresultate der Aktualisierungen der Korrelationen und einem, als Referenz dienenden, vergangenen Abschnitt der Liste der letzten Testresultate der Aktualisierungen der Korrelationen jeweils ein Korrelations-Indikator berechnet wird, der die Wahrscheinlichkeit dafür angibt, dass die jeweils zuletzt neu erstellten Protokollzeilen von der jeweiligen Korrelation abgewichen sind.

Eine weitere Verbesserung bei der Detektion von anomalen Betriebszuständen kann vorteilhafterweise erzielt werden, wenn für die Berechnung der Indikatoren zusätzlich zu den Testresultaten, die bei den Tests ermittelten p-Werte für die Berechnung des Indikators herangezogen werden.

Gemäß einer besonders vorteilhaften Variante eines erfindungsgemäßen Verfahrens kann in diesem Zusammenhang vorgesehen sein, dass alle Korrelations-Indikatoren eines Tokenpaares zu einem Tokenpaar-Indikator zusammengefasst werden und/oder alle Korrelations-Indikatoren eines Ereignistyps zu einem Ereignistyp-Indikator zusammengefasst werden, wobei der Tokenpaar-Indikator und der Ereignistyp-Indikator jeweils die Wahrscheinlichkeiten dafür angeben, dass die jeweils zugrundeliegenden Protokollzeilen von einer der zusammengefassten Korrelationen abgewichen sind.

Gemäß einer besonders vorteilhaften Variante eines erfindungsgemäßen Verfahrens kann weiters vorgesehen sein,

- dass in der Initialisierungsphase Ereignistypen ermittelt werden, deren Protokollzeilen in einem vorgegebenen zeitlichen Abstand zueinander, insbesondere unmittelbar nacheinander, vom Computersystem erstellt werden, und
- dass Tokenpaare erstellt werden, die jeweils einen, einen diskreten Datentyp aufweisenden, Token von verschiedenen der derart ermittelten Ereignistypen umfassen.

Ein Programm zur Durchführung eines Verfahrens kann vorteilhafterweise auf einem Datenträger abgespeichert und derart mobil sein.

Weitere Vorteile und Ausgestaltungen der Erfindung ergeben sich aus der Beschreibung und der beiliegenden Zeichnung.

Beispielhafte Ausführungsformen der Erfindung sind in der Zeichnung schematisch dargestellt und werden im Folgenden unter Bezugnahme auf die Zeichnung beispielhaft beschrieben.

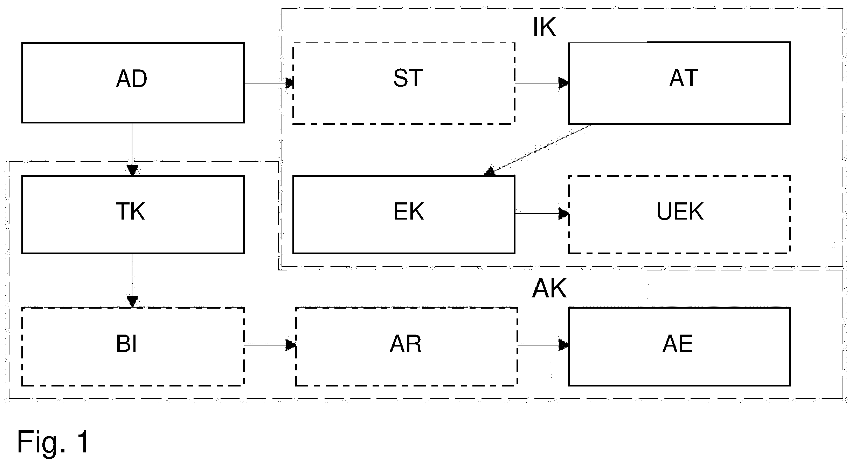

Im Folgenden zeigt Fig. 1 eine schematische Darstellung eines erfindungsgemäßen Verfahrens mit den erforderlichen, sowie optionalen Verfahrensschritten.

Ein Beispiel von Protokollzeilen eines Ereignistyps mit dem zugehörigen Repräsentanten ist in Tabelle 1 (Beispiel eines Templates mit zugehörigen Protokollzeilen und Datentypen) gegeben. Das Template des betrachteten Ereignistyps ist in der ersten Zeile der Tabelle gegeben. Die einzelnen Einträge der Spalten repräsentieren dabei den Wert eines statischen Tokens T bzw. eine Markierung (§) eines variablen Tokens T des Templates. Zeilen zwei bis sechs sind Protokollzeilen zu dem Ereignistyps, welche entlang der aller Leerzeichen getrennt wurden. Aus Übersichtlichkeitsgründen wurden aneinander angrenzende statische Token T zu jeweils einem zusammengefügt. Die Zeile sieben beschreibt die Datentypen der Token T. Dies ist vorteilhaft, da mit dem erfindungsgemäßen Verfahren diskrete Token T untersucht werden.

Tabelle 1: Beispiel eines Templates mit zugehörigen Protokollzeilen und Datentypen

| § | | § | ( | § | ) sent request to | § |
|---|---|---|---|---|---|---|
| Jul-17-11:30:18 | | user1 | ( | 10.2.12.9 | ) sent request to | 10.4.0.5 |
| Jul-17-11:32:27 | | user2 | ( | 10.2.12.6 | ) sent request to | 10.4.0.7 |
| Jul-17-11:33:22 | | user2 | ( | 10.2.12.9 | ) sent request to | 10.4.0.7 |
| Jul-17-11:35:58 | | user3 | ( | 10.2.12.6 | ) sent request to | 10.4.0.5 |
| Jul-17-11:36:43 | | user1 | ( | 10.2.12.6 | ) sent request to | 10.4.0.5 |
| chronologisch | statisch | diskret | statisch | diskret | statisch | diskret |

Viele Systeme erlauben keinen direkten Einblick in die laufenden Prozesse, stellen jedoch eine Protokolldatei zur Verfügung. Auf Basis dieser Protokolldaten ist es möglich, das Normalverhalten bzw. ein Modell des erwarteten Verhaltens zu erstellen. Die Protokolldatei kann daher weiters dazu genutzt werden um zu schlussfolgern, welche Ereignisse in Folge des Ablaufs eines Prozesses ausgeführt werden/wurden. Da die Angriffe auf Systeme die Systemabläufe i.d.R. verändern, können diese Veränderungen auch in der Protokolldatei erkannt werden. Die Protokollzeilen einer Protokolldatei, die sich von den erwarteten Protokollzeilen unterscheiden, nennt man Anomalien. Anomalien können in Protokolldateien entdeckt werden, indem die Protokolldateien des Systems unter Normalbetrieb, über längere Zeit, auf Muster hin analysiert werden und anschließend im nachfolgenden Betrieb beobachtet wird, ob diese Muster weiter bestehen. Sollten Inhalte der Protokolldateien die Muster nicht fortführen, werden diese Inhalte als Anomalien erkannt. Aus diesem Grund können Protokolldateien zur Anomalieerkennung genutzt werden.

Eine spezielle Art von Mustern in Protokolldaten sind Korrelationen zwischen Werten von zwei Token T eines Ereignistyps. Eine Korrelation zwischen zwei Token $T_1$, $T_2$ liegt vor, wenn während einer Beobachtung der angenommene Wert eines Tokens $T_1$ den Wert des anderen Tokens $T_2$ mitbestimmt, oder beeinflusst.

Korrelationen sind Beziehungen die in beide Richtungen wirken, da sobald in eine Richtung vorhanden auch in die andere Richtung ein Einfluss besteht. Im Allgemeinen ist man nicht an allen Korrelationen interessiert, sondern nur an jenen, die gewisse Anforderungen an die Protokolldaten und die Analysemethoden in einem spezifischen Anwendungsfall erfüllen. Dies können zum Beispiel eine maximale Anzahl an angenommene Werten des beeinflussten Tokens T bei festgehaltenen Wert des jeweils anderen Tokens T sein, oder, dass nur Korrelationen gesucht werden, bei der die höchste Wahrscheinlichkeit, der angenommenen Werte des beeinflussten Tokens $T_2$ bei festgehaltenen Wert des jeweils anderen Tokens $T_1$, einen gewissen Prozentwert überschreitet.

Hier sei noch erwähnt, dass, wenn eine Korrelation in eine Richtung besteht, die den Anforderungen genügt, nicht unbedingt auch eine Korrelation in die entgegengesetzte Richtung bestehen muss, die ebenfalls den Anforderungen genügt. Da für die Ausgabe des erfindungsgemäßen Verfahrens nur jene Korrelationen von Interesse sind, welche die Anforderungen erfüllen, werden die Richtungen in denen die Korrelationen wirken berücksichtigt.

Hier sei noch darauf hingewiesen, dass, sollte die Korrelation in beide Richtungen den Anforderungen genügen, beide Richtungen in den folgenden Ausführungsbeispielen getrennt behandelt werden. Im Folgenden wird nur noch von Korrelationen gesprochen, ohne explizit die Anforderungen oder die Richtungen zu erwähnen. Um die Notation kompakter zu halten, wird derjenige Token T dessen Werte Einfluss auf einen anderen Token T besitzen, als der erste Token $T_1$ bezeichnet und derjenige Token T, dessen Wert beeinflusst wird, als der zweite Token $T_2$ bezeichnet.

Der Ansatz eines erfindungsgemäßen Verfahrens ist für Token T, welche diskrete Werte annehmen, konzipiert. Diskrete Werte sind Werte, die kategorisch sind und sich dadurch auszeichnen, dass die Auswahl der angenommenen Werte aus einer begrenzten Menge entstammt. Eine Erweiterung der Methoden eines erfindungsgemäßen Verfahrens auf andere Datentypen, zB kontinuierliche Datentypen, ist nicht ohne weiteres möglich. Weiters ist es ebenfalls nicht ohne weitere Überlegungen möglich, Korrelationen zwischen Token T mit unterschiedlichen Datentypen zu generieren und zu testen.

Um Korrelationen in Protokolldaten zu finden, werden bei einem erfindungsgemäßen Verfahren die Verteilungen der Werte des zweiten Tokens $T_2$, bei festgehaltenen Werten des ersten Tokens $T_1$ erzeugt und analysiert. Das heißt, dass für jeden Wert, den der erste Token $T_1$ annehmen kann, eine Verteilung generiert wird, welche der empirischen Verteilung der Werte des zweiten Tokens $T_2$ entspricht, die jeweils auf Basis all jener Protokollzeilen erstellt wird, die den Wert in dem ersten Token $T_1$ angenommen haben. Im Folgenden wird die Verteilung der Werte des zweiten Tokens

$T_2$, wenn der erste Token $T_1$ einen gewissen Wert annimmt, die durch diesen Wert bedingte Verteilung genannt. Sollte aus dem Kontext klar ersichtlich sein, welcher Wert gemeint ist, wird von der bedingten Verteilung gesprochen.

In der Analyse werden die bedingten Verteilungen überprüft, ob sie aus einer Korrelation hervorgegangen sein können, oder davon ausgegangen werden kann, dass keine Korrelation für diesen Wert des ersten Tokens $T_1$ besteht.

Ein Problem, welches mit dem Auffinden von Korrelationen in Protokolldaten verbunden ist, ist das Problem von zufälligen Korrelationen. Man spricht von zufälligen Korrelationen, wenn die eingelesenen Protokolldaten eine Korrelation zwischen zwei Token T suggerieren, zwischen denen jedoch keine Korrelation existiert. Um diesem Phänomen entgegenzuwirken kann die Anzahl an Protokollzeilen erhöht werden oder schärfere Anforderungen an die Korrelationen gestellt werden.

Eine spezielle Art von Korrelationen sind die n:1- und 1:1-Korrelationen. n:1-Korrelationen sind Korrelationen, in denen der Wert des ersten Tokens $T_1$ den Wert des zweiten Tokens $T_2$ mitbestimmt. Das heißt, dass es zu jedem angenommenen Wert des ersten Tokens $T_1$ einen eindeutigen Wert für den zweite Token $T_2$ gibt, sodass für alle Protokollzeilen, die den gleichen Wert im ersten Token $T_1$ angenommen haben, der gleiche Wert im zweiten Token $T_2$ angenommen wird. 1:1-Korrelationen sind Korrelationen zwischen zwei Token $T_1$, $T_2$, bei der in beide Richtungen eine n:1-Korrelation besteht. Das heißt, dass der Wert jeder der beiden Token $T_1$, $T_2$ den Wert der jeweils anderen Token $T_1$, $T_2$ mitbestimmt.

Eine annähernde n:1-Korrelation ist eine Korrelation, bei der zu jedem angenommenen Wert des ersten Tokens $T_1$ es einen eindeutigen Wert für den zweiten Token $T_2$ gibt, sodass für alle Protokollzeilen, die den ersten Wert im ersten Token $T_1$ angenommen haben, der prozentuelle Anteil der Protokollzeilen, welche den zweiten Wert im zweiten Token $T_2$ angenommen haben, höher ist, als ein vorab festgelegter Schwellwert. Ein für die meisten repräsentativen Anwendungen sinnvoll gewählter Schwellwert ist z.B. 95%. Analog zu der Definition einer 1:1-Korrelationen ist eine annähernde 1:1-Korrelation eine Korrelation zwischen zwei Token $T_1$, $T_2$, bei der in beide Richtungen eine annähernde n:1-Korrelationen besteht.

## Voraussetzungen

Voraussetzung für die Erkennung von Anomalien gemäß einem erfindungsgemäßen Verfahren ist, dass den einzelnen Protokollzeilen zunächst basierend auf deren Syntax, insbesondere aufgrund der Ähnlichkeit der einzelnen Protokollzeilen zueinander und der die Protokollzeilen aufbauenden Teilzeichenabfolgen, jeweils zumindest ein Ereignistyp zugewiesen wird.

Aus dem Stand der Technik sind verschiedenste Vorgehensweisen bekannt, wie jeder Protokollzeile basierend auf deren Syntax ein Ereignistyp oder ggf. mehrere Ereignistypen zugewiesen werden können. Beispiele hierfür sind:

1. Ein Parser der mittels eines Parsergenerators (siehe EP19169705.1, A50461/2018) erstellt wurde, kann dazu genutzt werden, um den einzelnen Protokollzeilen einen Ereignistyp zuzuordnen. Allerdings fehlt dem Parser die Möglichkeit die Werte einzelner Token T zu analysieren.
2. Protokollzeilen werden zunächst nach ihrer Ähnlichkeit geclustert (siehe EP3267625, A50601/2016) Daher entsprechen alle Protokollzeilen, die demselben Cluster zugeordnet wurden einem Ereignistyp. Allerdings fehlt dem Clustering die Möglichkeit die Werte einzelner Token T zu analysieren.

Weitere Voraussetzung für das erfindungsgemäße Verfahren ist, dass anschließend für jeden Ereignistyp ein Template umfassend eine Anzahl von Token T, erstellt wird, indem die einzelnen Protokollzeilen an vorgegebenen Trennzeichen in Teilzeichenabfolgen unterteilt werden.

Wie bereits zuvor erwähnt, bezeichnen Teilzeichenabfolgen die einzelnen Teile einer Protokollzeile, die durch Separieren der Zeichenabfolge an vorgegebenen Trennzeichen, wie zum Beispiel Leerzeichen oder Beistrichen etc. entstehen. Diese können durch Tokens T repräsentiert werden. Jeder Ereignistyp lässt sich daher durch ein Template, bestehend aus einer Abfolge von Token T, beschreiben.

Das Template beschreibt somit die Struktur, d.h. die Abfolge der Teilzeichenabfolgen, der zugeordneten Protokollzeilen, und weist eine Anzahl von statischen Token, die nur einen Wert in allen Protokollzeilen besitzen, auf, die in ihrer Reihenfolge in allen Protokollzeilen des jeweiligen Ereignistyps vorhanden sind, und durch variable Token, die mindestens zwei Werte in den Protokollzeilen annehmen können, unterbrochen werden.

D.h. die Templates bestehen aus statischen Token, z.B. statischem Text, der in allen Protokollzeilen, die dem Ereignistyp entsprechen an derselben Stelle steht, und aus variablen Token T, z.B. variablem Text, die durch sogenannte Wildcards gekennzeichnet sein können, die an Stellen eingefügt werden, an denen die Zeilen variable Werte beinhalten.

Die einzelnen ermittelten Templates und deren Token T sind charakteristisch für die Protokolldatei. Da die Werte der Token T Auskunft über die Prozesse des protokollieren Systems geben, können aus den Korrelationen der Token T Rückschlüsse auf das Systemverhalten gezogen werden.

Für eine derartige Unterteilung der einzelnen Protokollzeilen an vorgegebenen Trennzeichen in Teilzeichenabfolgen bzw. eine derartige Tokenisierung der einzelnen Protokollzeilen sind aus dem Stand der Technik ebenfalls verschiedenste Vorgehensweisen bekannt, wie z.B.

1. Es besteht die Möglichkeit aus einem durch einen mittels eines Parsergenerators (siehe EP19169705.1, A50461/2018) erstellten Parserbaums, Templates für die jeweiligen Ereignistypen zu generieren, indem man die Token T der Knoten entlang eines Pfades des Parserbaums aneinanderfügt. Da der Parserbaum sowohl statische als auch variable Token T enthält, erhält man ein Template, das aus statischen und variablen Token T besteht. Die vorliegende Erfindung kann nun dazu genutzt werden, um die Werte der als variabel erkannten Token T zu analysieren. Diese Funktionalität fehlt dem Parsergenerator und dem Parser.

2. Ein Templategenerator (siehe A50285/2019, EP20160854.4) kann genutzt werden um nachdem ein Clustering durchgeführt wurde, für jeden Cluster bzw. Ereignistyp ein Template zu erstellen, das aus statischen und variablen Token T besteht. Die vorliegende Erfindung kann nun dazu genutzt werden, um die Werte der als variabel erkannten Token T zu analysieren. Diese Funktionalität fehlt sowohl dem Clustering als auch dem Templategenerator.

3. Eine auf Datentypen basierende Anomalieerkennung (siehe A50642/2020) kann genutzt werden, um jene Token T zu identifizieren, welche einen diskreten Datentyp aufweisen. Die vorliegende Erfindung kann nun dazu genutzt werden, um die Korrelationen zwischen den Werten der Token T mit diskretem Datentyp zu analysieren. Diese Funktionalität fehlt den auf Datentypen basierenden Anomalieerkennungen, da diese Ansätze nur einzelne Token T, jedoch nicht Korrelationen zwischen Token T analysieren.

Im Folgenden wird das erfindungsgemäße Verfahren zur Detektion von anomalen Betriebszuständen eines Computersystems zunächst allgemein beschrieben:

## Allgemeine Beschreibung eines erfindungsgemäßen Verfahrens

Der Aufbau eines erfindungsgemäßen Verfahrens kann in acht Schritte unterteilt werden, wobei hier auch einige optionale Schritte umfasst sind. Der Aufbau und die Unterteilung in Schritte sind in Fig. 1 schematisch dargestellt.

Generell werden zunächst die Daten bzw. Protokollzeilen aufbereitet (bezeichnet mit Aufbereitung der Daten "AD" in Fig. 1). In diesem **Aufbereitungs-Schritt** werden die Protokollzeilen in Teilzeichenabfolgen unterteilt und jeder Protokollzeile wird ein Ereignistyp zugeordnet, wie dies z.B. in Wurzenberger, M., Landauer, M., Skopik, F., & Kastner, W. (2019, April). AECID-PG: A Tree-Based Log Parser Generator To Enable Log Analysis. In 2019 IFIP/IEEE Symposium on Integrated Network and Service Management (IM) (pp. 7-12). IEEE. beschrieben ist. Die einzelnen Teilzeichenabfolgen werden für die folgenden Analysen als Werte zu den einzelnen Token T gespeichert.

Anschließend werden folgende Abschnitte jeweils für die Protokollzeilen der einzelnen Ereignistypen separat durchgeführt, d.h. bei jeder Ausführung der im Folgenden beschriebenen Abschnitte werden nur Protokollzeilen eines Ereignistyps verarbeitet.

Ausgehend von (AD) ist Fig. 1 ist in zwei Abschnitte unterteilt. Der Abschnitt von (AD) nach (UEK) wird die Initialisierung der Korrelationen (IK) genannt und der Abschnitt von (AD) nach (AR) stellt die Testphase mit einem Aktualisieren der Korrelationen (AK) dar. Die einzelnen Schritte, aus denen die Abschnitte bestehen, werden im Anschluss beschrieben.

Für den Ablauf eines erfindungsgemäßen Verfahrens werden Protokollzeilen aufbereitet, indem ihnen, wie zuvor beschrieben, jeweils ein Ereignistyp zugeordnet wird und sie entsprechend des zugehörigen Templates in Teilzeichenabfolgen unterteilt werden. Sobald eine gewisse Anzahl aufbereitet wurde, werden die Korrelationen initialisiert. In der Initialisierungsphase werden alle bedingten Verteilungen erzeugt und anschließend einzeln überprüft und entfernt, falls es wahrscheinlich ist, dass einzelne bedingte Verteilungen zufälligen Korrelationen entsprechen.

Die Initialisierungsphase kann im Laufe des normalen Betriebs wiederholt werden, wenn regelmäßig neue Korrelationen initialisiert werden sollen. Das kann vorteilhaft sein, da im normalen Betrieb eines erfindungsgemäßen Verfahrens gefundene Korrelationen nicht mehr getestet werden, wenn eingelesene Protokolldaten diese Korrelationen über einen längeren Zeitraum nicht beinhalten. Um entgegenzuwirken, dass bei langen Beobachtungszeiträumen die überprüften Korrelationen immer weiter reduziert werden, können regelmäßig Korrelationen neu initialisiert werden.

Wenn die Initialisierung erfolgt ist, werden die erzeugten Korrelationen, mit einer gewissen Anzahl an aufbereiteten Protokollzeilen, regelmäßig getestet und deren Verteilungen aktualisiert. Bei der Anzahl der Protokollzeilen im Initialisierungs- und Updateschritt, kann der Benutzer vorteilhafterweise darauf achten, dass die Anzahl nicht zu gering ist, um eine adäquate Analyse der Protokollzeilen zu gewährleisten.

Generell umfasst ein erfindungsgemäßes Verfahren die im Folgenden beschriebenen zwingenden Schritte, die in Fig. 1 mit einer durchgehenden Umrandung gekennzeichnet sind, sowie eine Reihe von optionalen Schritten, die in Fig. 1 mit einer strichlierten Umrandung gekennzeichnet sind.

1. Aufbereiten der Daten (AD in Fig. 1): In diesem Schritt werden die Protokollzeilen in Token T unterteilt und jeder Protokollzeile wird ihr Ereignistyp zugeordnet, wie dies z.B. in Wurzenberger, M., Landauer, M., Skopik, F., & Kastner, W. (2019, April). AECID-PG: A Tree-Based Log Parser Generator To Enable Log Analysis. In 2019 IFIP/IEEE Symposium on Integrated Network and Service Management (IM) (pp. 7-12). IEEE, beschrieben ist. Die Werte der einzelnen Token T werden für die folgenden Analysen gespeichert. Es ist zu beachten, dass bei jeder Ausführung der im Folgenden beschriebenen Schritte nur Protokollzeilen eines Ereignistyps verarbeitet werden.

2. Selektieren (ST in Fig. 1) der überprüften Token T: Hier können optional diejenigen Token T ausgewählt werden, zwischen deren Werten nach Korrelationen gesucht wird. Es werden nur Token T ausgewählt, deren Werte diskret sind. Diese Aufgabe kann z.B. wie in der österreichischen Patentanmeldung A50642/2020, eingereicht am 28. Juli 2020, ausgeführt werden, da den gesuchten Token T der diskrete Datentyp zugeordnet wird. Dieser Schritt kann optional sein, wenn bekannterweise nur Token T mit diskreten Werten auftreten und somit keine Selektion notwendig ist.

Zusätzlich können, um den Prozess zu beschleunigen, Token T, die primär einen einzigen Wert annehmen, von der Auswahl ausgeschlossen werden. Die Korrelationen derartiger Token T beispielsweise ebenfalls durch das in der österreichischen Patentanmeldung A50642/2020 beschriebene Verfahren analysiert werden.

3. Auswahl (AT in Fig. 1) der Tokenpaare TP: In diesem Schritt werden nach Korrelationsrichtung geordnete Tokenpaare TP bestehend aus jeweils zwei Token gebildet. Die Tokenpaare TP werden in den nachfolgenden Schritten auf mögliche Korrelationen, die den Einfluss der Werte des ersten Tokens $T_1$ des Paares auf die Werte des zweiten Tokens $T_2$ angeben, überprüft.

Die Paarbildung, welche standardmäßig erfolgen kann, ist jeden Token T mit jedem anderen Token T zu paaren, wobei für jede Auswahl von zwei Token T zwei unterschiedlich geordnete Tokenpaare TP gebildet werden, die jeweils eine der beiden möglichen Richtungen der Korrelation repräsentieren. Diese Auswahl ermöglicht, dass in diesem Schritt keine Token T von gesuchten Korrelationen ausgeschlossen werden. Eine weitere Auswahlmöglichkeit für die Bildung von Tokenpaaren TP ist, die Verteilungen der angenommenen Werte der Token T zu vergleichen und nur Token T zu paaren, die eine ähnliche Verteilung ihrer Werte besitzen. Dieser Ansatz ermöglicht ein schnelleres Auffinden von annähernden 1:1-Korrelationen.

Eine weitere Möglichkeit ist es, die angenommenen Werte zu betrachten und Token T zu paaren die einen ähnlichen Wertebereich besitzen. Beispiele für Korrelationen die auf diese Weise auffindbar sind, sind Kommunikationen zwischen mehreren Geräten, Benutzern, etc.

4. Erstellen der Korrelationen (EK in Fig. 1): In diesem Schritt werden die bedingten Verteilungen der Korrelationen generiert, die später überprüft und aktualisiert werden. Dies erfolgt in der Form, dass für jeden Wert des ersten Tokens $T_1$, die durch diesen Wert bedingte Verteilung berechnet und abgespeichert wird.

5. Überprüfen der Korrelationen (UEK in Fig. 1): Nachdem die Korrelationen generiert wurden, kann in diesem Schritt optional überprüft werden, ob sich diese Korrelationen wie echte Korrelationen zwischen den Werten verhalten. Dieser Schritt ist optional, da in gewissen Protokolldaten eine Korrelation zwischen allen Token T angenommen werden kann. Diese Protokolldaten besitzen meist eine geringe Anzahl an Ereignistypen und Anzahl von Token T pro Ereignistyp.

Sollte eine Korrelation einer Überprüfung nicht standhalten, wird die durch den betrachteten Wert bedingte Verteilung im Anschluss nicht mehr getestet oder aktualisiert. Für das Überprüfen der Korrelationen können verschiedene Ansätze, wie im Weiteren näher erläutert, gewählt werden, womit die resultierenden Korrelationen, durch das Anpassen der gestellten Anforderungen der Tests, angepasst werden können um die gesuchten Korrelationen zu erzeugen. Beispiele für diese Anforderungen können sein, dass nur nach annähernd n:1-Korrelationen gesucht wird, Korrelationen bei deren bedingten Verteilungen ein Wert zumindest 50% Auftrittswahrscheinlichkeit erreicht, etc.

Diese und weitere Ansätze können einzeln oder hintereinander gereiht ausgeführt werden, um die Korrelationen zu finden, die die gestellten Anforderungen erfüllen. Bei Verwendung von mehreren Ansätzen können auch jene Korrelationen ausgewählt werden, welche mindestens eine der Anforderungen erfüllen, um alle Anforderungen mit den Korrelationen abzudecken.

Der erste Ansatz ist, die generierten bedingten Verteilungen auf Ähnlichkeit zu jener Verteilung zu überprüfen, bei der alle Werte gleich wahrscheinlich sind. Sind bedingte Verteilungen ähnlich zu dieser Verteilung, deutet dies darauf hin, dass diese bedingte Verteilungen zu keinen echten Korrelationen gehören.

Ein weiterer Ansatz ist es, alle bedingten Verteilungen von einem Tokenpaar TP untereinander zu vergleichen. Sollten sie eine große Ähnlichkeit aufweisen, deutet dies darauf hin, dass der angenommene Wert des ersten Tokens

$T_1$ keinen Einfluss auf den Wert des zweiten Tokens $T_2$ besitzt und daher keine Korrelation zwischen den Werten besteht.

Ein dritter möglicher Ansatz benötigt mindestens eine andere vorangestellte Überprüfung, bei der Korrelationen entfernt werden, die der Überprüfung nicht standhalten, um zu funktionieren. Dieser Ansatz betrachtet nicht die einzelnen bedingten Verteilungen, sondern überprüft die Häufigkeiten der Werte des ersten Tokens $T_1$ jedes Tokenpaares TP. Wenn die Summe der Häufigkeiten der Werte, die für die Korrelation angenommen wurden, sehr gering ist, deutet dies darauf hin, dass keine Korrelation in der untersuchten Richtung zwischen den Token T besteht, sondern die Korrelationen nur zufällig entstanden sind. Sollte dieser Fall eintreten, werden alle Korrelationen dieses Tokenpaares TP gelöscht.

6. Testen der Korrelationen (TK in Fig. 1): In diesem Schritt werden die Korrelationen auf Basis von neu eingelesen Daten bzw. Protokollzeilen getestet und optional nachfolgend aktualisiert. Dafür wird für jede gefundene Korrelation überprüft, ob die Werte der neu aufbereiteten Protokollzeilen den bedingten Verteilungen entsprechen, welche in der Korrelation definiert sind. Für die Überprüfung der Korrelationen können Tests auf Homogenität, wie in Kusolitsch, N. (2014). Maß- und Wahrscheinlichkeitstheorie: Eine Einführung. Springer-Verlag. beschrieben, insbesondere ein Chiquadrattest auf Homogenität, wie in Bolboacă, S. D., Jäntschi, L., Sestraş, A. F., Sestraş, R. E., & Pamfil, D. C. (2011). Pearson-Fisher chi-square statistic revisited. Information, 2(3), 528-545. beschrieben, eingesetzt werden. Das Resultat des Tests wird abgespeichert. Optional kann, insbesondere nur dann, wenn das Testresultat positiv war, die bedingte Verteilung mit Hilfe der neuen Werte aktualisiert werden, indem die Verteilung der Werte des Aktualisierungsschrittes proportional in die getestete bedingte Verteilung einfließt.

Sollten sich zu einer Korrelation die negativen Resultate häufen, kann optional die Korrelation verworfen werden. Für die Entscheidung, wann sich negative Resultate häufen, kann insbesondere ein Binomialtest, wie in Henze, N. (1997). Stochastik für Einsteiger (Vol. 8). Vieweg. beschrieben, eingesetzt werden.

Um das Auftreten neuer Korrelationen zu ermöglichen und um entgegenzuwirken, dass bei langen Beobachtungszeiträumen die Anzahl der überprüften Korrelationen immer weiter reduziert wird, können regelmäßig Tokenpaare TP ohne Korrelationen neu initialisiert werden und in den Testablauf eingebunden werden.

7. Berechnung (BI in Fig. 1) von Indikatoren: Dieser Schritt ist optional. Für manche Protokolldaten sind die Korrelationen zwischen Token T zu schwach ausgeprägt, oder die Menge der zu analysierenden Protokollzeilen zu groß, als dass die Ausgabe aller negativ getesteten Korrelationen praktikabel wäre. In diesem Schritt werden die Testresultate der Aktualisierungen der Korrelationen analysiert und auf dessen Basis Korrelations-Indikatoren berechnet, die die Wahrscheinlichkeit des Abweichens der Protokollzeilen von dieser Korrelation angeben. Die Berechnung erfolgt auf Basis eines Abschnittes der Liste der letzten Testresultate $M_{Akt}$ und einem vergangenen Abschnitt der Liste der letzten Testresultate $M_{Ref}$, die als Referenz dient, durchgeführt.

Alternativ können statt der Liste der Testresultate, die Liste der p-Werte der Tests benutzt werden, um mehr Information der Tests in die Berechnung des Korrelations-Indikators $I_K$ einfließen zu lassen. Da man auf Basis des p-Werts das Testresultat ableiten kann, geht dadurch keine Information verloren.

Das Resultat des Korrelations-Indikators $I_K$ ist höher, je mehr sich die Resultate/Werte der Listen $M_{Akt}$ und $M_{Ref}$ unterscheiden.

Anschließend an die Berechnung der Korrelations-Indikatoren, können Tokenpaar-Indikatoren $I_{TP}$ und/oder Ereignistyp-Indikatoren $I_E$ berechnet werden, die die Information aller Korrelations-Indikatoren $I_K$ aller Korrelationen eines Tokenpaares TP bzw. aller Korrelations-Indikatoren $I_K$ aller Korrelationen aller Tokenpaare TP zu einem Ereignistyp, zusammenfassen.

8. Ausgabe der Resultate (AR in Fig. 1): In diesem optionalen Schritt kann der Verlauf der Häufungen von negativ getesteten Korrelationen bzw. berechneten Indikatoren ausgegeben werden, um für nachfolgende Untersuchungen oder Bewertungen zu dienen.

9. Anomalieerkennung (AE in Fig. 1): Ein anomaler Betriebszustand des Computersystems bzw. eine Anomalie wird erkannt, wenn beim Testen der Korrelationen (TK in Fig. 1) in der Testphase zumindest der Test von einer Korrelation ein negatives Resultat besitzt. Das bedeutet, dass die Werte der Token T der getesteten Protokollzeilen nicht der Regel der Korrelation entsprechen.

Optional kann, wie im Abschnitt Berechnung von Indikatoren "BI" beschrieben, der Verlauf der Resultate der Tests zu den Korrelationen analysiert werden und ein Wert, der sogenannte Korrelations-Indikator $I_K$, berechnet, der die Wahrscheinlichkeit dafür angibt, dass die Regel zu einer Korrelation durch eine Anomalie gebrochen wurde. Zusätzlich können alle Ergebnisse der Korrelations-Indikatoren $I_K$ eines Tokenpaares TP zu einem Tokenpaar-Indikator $I_T$ oder allen Tokenpaaren TP eines Ereignistyps zu einem Ereignistyp-Indikator $I_E$ zusammengefasst werden. In diesem Fall würde ein anomaler Betriebszustand des Computersystems bzw. eine Anomalie erkannt werden, wenn ein Wert der berechneten Korrelationen- und/oder Tokenpaar- und/oder Ereignistyp-Indikatoren einen gewissen Schwellwert überschreitet.

Man beachte, dass nur der Schritt 1 ein einziges Mal ausgeführt wird. Im Gegensatz zu den anderen Schritten, welche sich jeweils auf einen Ereignistyp beziehen und daher ausgeführt werden, sobald eine gewisse Anzahl an Protokollzeilen zu dem Ereignistyp aufbereitet wurden.

**Ausführungsbeispiele eines erfindungsgemäßen Verfahrens**

Bei den folgenden Ausführungsbeispielen werden zunächst die verwendeten Methoden und Tests ausformuliert. Danach wird das Verfahren schrittweise mit einem Beispieldatensatz ausgeführt. Die Tests sind ebenfalls beispielhaft und können für die Ausführung eines erfindungsgemäßen Verfahrens durch gleichwertige Tests ersetzt werden. Die Ausführungsbeispiele für die Schritte (ST) bis (UEK) werden dabei hintereinander ausgeführt und bilden gemeinsam die Initialisierung der getesteten Korrelationen. Die Ausführungsbeispiele für (UK) und (BI) bilden einen Aktualisierungsschritt und werden mit einem anderen Datensatz ausgeführt.

**Initialisierungsphase bzw. Initialisieren der Korrelationen (IK in Fig. 1):**

Die in diesem Abschnitt beschrieben Ausführungsbeispiele behandeln jeweils einen Schritt der Initialisierungsphase der Korrelationen. Die Schritte werden immer auf Basis desselben Datensatzes ausgeführt und bauen aufeinander auf.

Der verwendete Beispiel-Datensatz ist in der Tabelle 2 (Beispiel eines Templates mit zugehörigen Protokollzeilen und Datentypen) dargestellt:

Tabelle 2: Beispiel eines Templates mit zugehörigen Protokollzeilen und Datentypen

| § | | § | ( | § | ) sent request to | § |
|---|---|---|---|---|---|---|
| Jul-17-11:30:18 | | user1 | ( | 10.2.12.9 | ) sent request to | 10.4.0.5 |
| Jul-17-11:32:27 | | user2 | ( | 10.2.12.6 | ) sent request to | 10.4.0.7 |
| Jul-17-11:33:22 | | user2 | ( | 10.2.12.9 | ) sent request to | 10.4.0.7 |
| Jul-17-11:35:58 | | user3 | ( | 10.2.12.6 | ) sent request to | 10.4.0.5 |
| Jul-17-11:36:43 | | user1 | ( | 10.2.12.6 | ) sent request to | 10.4.0.5 |
| Jul-17-11:37:29 | | user1 | ( | 10.2.12.9 | ) sent request to | 10.4.0.5 |
| Jul-17-11:39:38 | | user2 | ( | 10.2.12.6 | ) sent request to | 10.4.0.7 |
| Jul-17-11:40:33 | | user2 | ( | 10.2.12.6 | ) sent request to | 10.4.0.7 |
| Jul-17-11:43:09 | | user3 | ( | 10.2.12.6 | ) sent request to | 10.4.0.5 |
| Jul-17-11:43:54 | | user1 | ( | 10.2.12.6 | ) sent request to | 10.4.0.5 |
| chronologisch | statisch | diskret | statisch | diskret | statisch | diskret |

Wie man aus dem Template ablesen kann (1. Zeile), besteht der Ereignistyp aus sieben Token T (4 Wildcards §, Leerzeichen " ", sowie Zeichenfolgen " (" und ") sent request to "). Bei der Aufbereitung wurden die Werte der Token T in getrennten Mengen bzw. Listen gespeichert, sodass sie in den einzelnen Ausführungsschritten zur Verfügung stehen.

**Selektieren der überprüften Token (ST)**

Dieses Ausführungsbeispiel beschreibt die Selektion der Token T, welche im Anschluss auf Korrelationen überprüft werden. Der Test in diesem Beispiel ob die Werte diskret sind und infolgedessen selektiert werden, beruht darauf, dass diskrete Werte nur eine begrenzte Anzahl an Werten annehmen. Der gewählte Test ist positiv, wenn mindestens zwei Werte unterschiedlich sind und maximal 35% der Werte unterschiedlich sind. Ist eine der Bedingungen nicht erfüllt ist der Test negativ. In diesem Beispiel besteht der Datensatz für die Berechnung aus 10 Zeilen, womit maximal drei verschiedene Werte erlaubt sind.

Der Test auf diskrete Werte für die Token T2, T4 und T6 mit den Werten " ", " (" und ") sent request to " sind negativ, da sie jeweils nur einen Wert beinhalten. Der Test für den ersten Token T1 ist ebenfalls negativ, da er zehn unterschiedliche Werte beinhaltet, und damit über dem Schwellwert von 3 liegt. Die anderen drei Token T3, T5 und T7 besitzen jeweils zwei oder drei unterschiedliche Werte, womit diese drei Token T selektiert werden.

**Auswahl (AT in Fig. 1) der Tokenpaare TP**

Für die folgenden Beispiele könnte der Ansatz gewählt werden, dass jeder Token T mit jedem anderen gepaart wird. Damit wäre die Liste der Korrelationen [T3-T5; T3-T7; T5-T3; T5-T7; T7-T3; T7-T5]. Beispielhaft jedoch werden in den folgenden Schritten nur Korrelationen zwischen den Tokenpaaren [T3-T5; T3-T7; T5-T3] überprüft.

**Erstellen der Korrelationen (EK in Fig. 1)**

In diesem Schritt werden die Korrelationen erzeugt, indem die bedingten Verteilungen zu den einzelnen Tokenpaaren TP berechnet und abgespeichert werden. In diesem Beispiel werden nur die bedingten Verteilungen der Tokenpaare T3-T7 und T5-T3 aufgelistet, um die Übersicht zu gewährleisten.

Die Listen der bedingten Verteilungen zum Tokenpaar T3-T5 sind:

T3 = user1 → T7 = [10.2.12.6: 50%, 10.2.12.9: 50%]
T3 = user2 → T7 = [10.2.12.6: 75%, 10.2.12.9: 25%]
T3 = user3 → T7 = [10.2.12.6: 100%]

Die Listen der bedingten Verteilungen zum Tokenpaar T3-T7 sind:

T3 = user1 → T7 = [10.4.0.5: 100%]
T3 = user2 → T7 = [10.4.0.7: 100%]
T3 = user3 → T7 = [10.4.0.5: 100%]

Die Listen der bedingten Verteilungen zum Tokenpaar T5-T3 sind:

T5 = 10.2.12.6 → T3 = [user1: 29%, user2: 42%, user3: 29%]
T5 = 10.2.12.9 → T3 = [user1: 67%, user2: 33%]

**Überprüfen der Korrelationen (UEK in Fig. 1)**

Die Überprüfung in diesem Ausführungsbeispiel besteht aus zwei Ansätzen, die hintereinander ausgeführt werden. Der erste Ansatz ist, die generierten bedingten Verteilungen auf Ähnlichkeit zu jener Verteilung zu überprüfen, bei der alle Werte gleich wahrscheinlich sind. Der zugehörige Test ist

$$\sum_{i \in N, i \le n} |p_i - \frac{1}{n}| \ge \tau$$
,

wobei n die Anzahl der Werte der bedingten Verteilung zu der Korrelation ist, $p_i$ die Wahrscheinlichkeit des i-ten Wertes ist, und $\tau$ ein Schwellwert ist. Gilt die Ungleichung, ist der Test positiv, sollte sie nicht erfüllt sein, ist der Test negativ. Für dieses Beispiel sei der Schwellwert mit 0.5 angenommen.

In der zweiten Überprüfung werden alle Korrelationen zu den einzelnen Tokenpaaren TP jeweils zusammen überprüft. Wenn die Summe der Häufigkeiten der Werte, für die Korrelationen angenommen wurden, geringer ist als ein Schwellwert, werden sämtliche Korrelationen entfernt. Liegt die Summe über oder ist gleich dem Schwellwert, wird keine Korrelation entfernt. Der Schwellwert liegt in diesem Beispiel bei 0.6.

Zuerst werden die Korrelationen einzeln überprüft. Die Berechnungen zu den einzelnen Werten der Tokenpaare TP lauten:

Berechnungen zum Tokenpaar T3-T5:

user1 :

$$\sum_{i \in N, i \le 2} |p_i - \frac{1}{2}| = \left|\frac{1}{2} - \frac{1}{2}\right| + \left|\frac{1}{2} - \frac{1}{2}\right| = 0 < 0.5$$

user2:

$$\sum_{i \in N, i \le 2} |p_i - \frac{1}{2}| = \left|0.75 - \frac{1}{2}\right| + \left|0.25 - \frac{1}{2}\right| = 0.5 \ge 0.5$$

user3:

$$\textstyle\sum_{i\in N,i\leq 2}|p_i - \frac{1}{2}| = \left|1 - \frac{1}{2}\right| + \left|0 - \frac{1}{2}\right| = 1 \geq 0.5$$

Berechnungen zum Tokenpaar T3-T7:

user1 :

$$\textstyle\sum_{i\in N,i\leq 2}|p_i - \frac{1}{2}| = \left|1 - \frac{1}{2}\right| + \left|0 - \frac{1}{2}\right| = 1 \geq 0.5$$

user2:

$$\textstyle\sum_{i\in N,i\leq 2}|p_i - \frac{1}{2}| = \left|0 - \frac{1}{2}\right| + \left|1 - \frac{1}{2}\right| = 1 \geq 0.5$$

user3:

$$\textstyle\sum_{i\in N,i\leq 2}|p_i - \frac{1}{2}| = \left|1 - \frac{1}{2}\right| + \left|0 - \frac{1}{2}\right| = 1 \geq 0.5$$

Berechnungen zum Tokenpaar T5-T3:

10.2.12.6:

$$\textstyle\sum_{i\in N,i\leq 3}|p_i - \frac{1}{3}| = \left|0.29 - \frac{1}{3}\right| + \left|0.42 - \frac{1}{3}\right| + \left|0.29 - \frac{1}{3}\right| = 0.18 < 0.5$$

10.2.12.9:

$$\textstyle\sum_{i\in N,i\leq 3}|p_i - \frac{1}{3}| = \left|0.67 - \frac{1}{3}\right| + \left|0.33 - \frac{1}{3}\right| + \left|0 - \frac{1}{3}\right| = 0.67 \geq 0.5$$

Da die durch den Wert "10.2.12.6" bedingte Verteilung des Tokenpaares T5-T3 die in der Beschreibung definierte Ungleichung nicht erfüllt, wird diese Korrelation gelöscht. Alle anderen Korrelationen erfüllen sie und haben damit die erste Überprüfung bestanden.

Als nächstes werden die zugehörigen Korrelationen zu den einzelnen Tokenpaaren TP als gesamtes getestet. Die Berechnungen für die Tests lauten:

T3-T5:

$$p_{user2} + p_{user3} = 0.4 + 0.2 = 0.6 \geq 0.6$$

T3-T7:

$$p_{user1} + p_{user2} + p_{user3} = 0.4 + 0.4 + 0.2 = 1 \geq 0.6$$

T5-T3:

$$p_{10.2.12.9} = 0.3 < 0.6$$

Da das Tokenpaar T5-T3 die in der Beschreibung definierte Ungleichung nicht erfüllt, werden alle zu diesem Tokenpaar TP zugehörigen Korrelationen gelöscht.

Womit die erzeugten Korrelationen folgende sind:

T3-T5:

T3 = user2 → T7 = [10.2.12.6: 75%, 10.2.12.9: 25%]
T3 = user3 → T7 = [10.2.12.6: 100%]

T3-T7:

T3 = user1 → T7 = [10.4.0.5: 100%]
T3 = user2 → T7 = [10.4.0.7: 100%]
T3 = user3 → T7 = [10.4.0.5: 100%]

**Testphase bzw. Aktualisieren der Korrelationen (AK in Fig. 1):**

Dieser Abschnitt handelt von der Testung und Aktualisierung der Korrelationen. Hierfür werden die Korrelationen auf Basis der in Tabelle 3 (Beispiel eines Templates mit zugehörigen Protokollzeilen und Datentypen) abgebildeten Protokollzeilen getestet und aktualisiert.

Tabelle 3: Beispiel eines Templates mit zugehörigen Protokollzeilen und Datentypen

| § | | § | ( | § | ) sent request to | § |
|---|---|---|---|---|---|---|
| Jul-17-11:30:18 | | user2 | ( | 10.2.12.6 | ) sent request to | 10.4.0.7 |
| Jul-17-11:32:27 | | user2 | ( | 10.2.12.6 | ) sent request to | 10.4.0.6 |
| Jul-17-11:33:22 | | user3 | ( | 10.2.12.6 | ) sent request to | 10.4.0.5 |
| Jul-17-11:35:58 | | user2 | ( | 10.2.12.9 | ) sent request to | 10.4.0.6 |
| Jul-17-11:36:43 | | user2 | ( | 10.2.12.9 | ) sent request to | 10.4.0.6 |
| Jul-17-11:37:29 | | user2 | ( | 10.2.12.6 | ) sent request to | 10.4.0.6 |
| Jul-17-11:39:38 | | user3 | ( | 10.2.12.9 | ) sent request to | 10.4.0.5 |
| Jul-17-11:40:33 | | user3 | ( | 10.2.12.6 | ) sent request to | 10.4.0.5 |
| Jul-17-11:43:09 | | user2 | ( | 10.2.12.9 | ) sent request to | 10.4.0.7 |
| Jul-17-11:43:54 | | user2 | ( | 10.2.12.6 | ) sent request to | 10.4.0.6 |
| chronologisch | statisch | diskret | statisch | diskret | statisch | diskret |

Die abgebildeten Protokollzeilen besitzen denselben Ereignistyp, wie der Datensatz der in Tabelle 2 abgebildet ist. Bei der Aufbereitung wurden die Werte der Token T in getrennten Listen gespeichert, sodass sie in den folgenden Ausführungsschritten zur Verfügung stehen.

Die Schritte die in diesem Ausführungsbeispiel behandelt werden sind die Schritte Testen der Korrelationen (TK), Berechnen von Indikatoren (BI) und (im Zuge des Beispiels zur Berechnung von Indikatoren) Anomalieerkennung (AE).

**Testen der Korrelationen (TK in Fig. 1)**

Dieses Bespiel beschreibt das Testen der Korrelationen. Sollte der Test zu einer Korrelation ein positives Resultat besitzen, wird die Korrelation mit Hilfe der Stichprobe des Aktualisierungsschrittes aktualisiert. In diesem Ausführungsbeispiel ist der Test, welcher benutzt wird, um zu überprüfen, ob die Protokollzeilen der Stichprobe den Korrelationen folgen, der Chiquadrattest auf Homogenität, welcher durch die folgende Teststatistik gegeben ist:

$$X^2 = \sum_{i=1}^{r} \sum_{j=1}^{c} \frac{(O_{i,j} - E_{i,j})^2}{E_{i,j}} \approx \chi^2((r-1)(c-1))$$

$$E_{i,j} = (n_i * n_j) \Big/ \left( \sum_{j,j} O_{i,j} \right)$$

In dieser Berechnung bezeichnet r die Anzahl der getesteten Stichproben, welche im Anwendungsgebiet eines erfindungsgemäßen Verfahrens immer mit 2 angenommen wird und c die Anzahl der Kategorien. $O_{i,j}$ bezeichnet die beobachtete Anzahl an Werten der Kategorie j der Stichprobe i und $E_{i,j}$ die erwartete Anzahl an Werten der Kategorie j der Stichprobe i.

Dabei ist $n_i$ die Größe der Stichprobe i und $n_j$ die Anzahl aller beobachteten Werte, die in die Kategorie j fallen.

Bei Korrelationen, bei denen sich keine Protokollzeilen in der Stichprobe befinden, sodass der Chiquadrattest nicht ausführbar ist, wird kein Testresultat ausgegeben. Bei Korrelationen mit nur einem Wert im zweiten Token $T_2$, kann der Chiquadrattest nicht ausgeführt werden, wenn in allen Protokollzeilen, welche im ersten Token $T_1$ mit dem Wert des ersten Tokens der jeweiligen Korrelation übereinstimmen, ebenfalls nur dieser Wert im zweiten Token $T_2$ auftritt. In diesen Fällen wird ein positives Resultat gespeichert, da die Korrelation weiterhin besteht.

Das gewählte Signifikanzniveau dieses Tests ist $\alpha_1 = 0.05$. Damit ergibt sich der kritische Wert dieses Tests von $X^2_{(r-1)(c-1),1-\alpha 1} = X^2_{(2-1)(2-1),1-0.05} = X^2_{1,0.95} = 3.8415$. Der Chiquadrattest ist positiv, wenn der Wert der Teststatistik kleiner oder gleich dem kritischen Wert ist. Man beachte, dass der kritische Wert auch abhängig von der Anzahl der angenommenen Werte ist und deshalb nicht immer ein einzelner Wert für mehrere Korrelationen oder mehrere Tokenpaare TP benutzt werden kann. Weiters kann vorteilhafterweise berücksichtigt werden, dass für Stichproben von geringem Umfang die kritischen Werte ungenau sein können.

Nachfolgend zu dem Test kann überprüft werden, ob die Hypothesen verworfen werden sollen. Dies ist jedoch wegen der Unschärfe des Tests bei kleinen Stichproben erst für spätere Aktualisierungsschritte sinnvoll. Dieser Test kann als Binomialtest ausgeführt werden, wobei die Wahrscheinlichkeit des Auftretens eines negativen Ergebnisses p = $\alpha_1$ als das Signifikanzniveau des Chiquadrattests und das Signifikanzniveau des Binomialtests als $\alpha_2 = 0.05$ gewählt werden könnte.

Da der Binomialtest in diesem Ausführungsbeispiel nicht berechnet wird, werden im Anschluss jene Korrelationen aktualisiert, welche ein positives Resultat im Chiquadrattest auf Homogenität besessen haben. Die Aktualisierung erfolgt, indem die bedingte Verteilung der Korrelation anteilig an die bedingte Verteilung der Korrelation der Stichprobe des Aktualisierungsschrittes angepasst wird. Gleichbedeutend dazu wäre, dass die bedingte Verteilung der Korrelation auf Basis der für deren Berechnung benutzte Stichprobe zuzüglich der Stichprobe des momentanen Aktualisierungsschrittes berechnet wird.

Die getesteten Korrelationen sind die im Ausführungsbeispiel des Initialisierens der Korrelationen erstellten Korrelationen, welche auf Basis von zehn Protokollzeilen erstellt wurden. Um eine bessere Übersicht für die Berechnung des Chiquadrattests zu gewährleisten wird in der folgenden Darstellung der Korrelationen nicht nur die Verteilung der Werte in absoluten Zahlen angegeben, sondern jeweils getrennt durch ein "/" die Verteilung der Werte der neuen Protokollzeilen in absoluten Zahlen angegeben.

T3-T5(user2): [10.2.12.6: 3, 10.2.12.9: 1] / [10.2.12.6: 4, 10.2.12.9: 3]
T3-T5(user3): [10.2.12.6: 2] / [10.2.12.6: 2, 10.2.12.9: 1]
T3-T7(user1): [10.4.0.5: 4] / [10.4.0.5: 0]
T3-T7(user2): [10.4.0.7: 4] / [10.4.0.6: 5, 10.4.0.7: 2]
T3-T7(user3): [10.4.0.5: 2] / [10.4.0.5: 3]

Die berechneten Teststatistiken der Chiquadrattests auf Homogenität mit den oben beschriebenen Verteilungen lauten:

T3-T5: [user2: 0.3508, user3: 0.8333]
T3-T7: [user1: ---, user2: 5.2381, user3: ---]

Die Korrelationen, bei denen kein Wert steht, haben entweder keine eingelesenen Protokollzeilen, die getestet werden können, oder immer nur den gleichen Wert.

Da die kritische Distanz 3.8415 ist, sind von den drei durchgeführten Chiquadrattests, die zwei Tests des Tokenpaares T3-T5 positiv, da 0.3508 < 3.8415 und 0.8333 < 3.8415, und der Test von T3-T7(user2) negativ, da 5.2381 ≥ 3.8415.

Aus diesem Grund und weil der Test zu T3-T7(user3) auch positiv war, werden für die Korrelationen T3-T5(user2), T3-T5(user3) und T3-T7(user3) jeweils ein positives Testresultat gespeichert und die Korrelationen werden aktualisiert. Da sich keine passenden Protokollzeilen für Korrelation T3-T7(user1) in der Stichprobe befinden, wird für diese Korrelation weder ein positives noch ein negatives Testresultat abgespeichert, und für Korrelation T3-T7(user2) wird ein negatives Testresultat wegen dem negativen Chiquadrattest abgespeichert.

Für die Aktualisierung der Korrelationen werden die Werte der zwei getesteten Verteilungen zusammengefasst und diese Verteilung ergibt die neue Korrelation, die im nächsten Aktualisierungsschritt getestet wird. Für die drei Korrelationen sind die aktualisierten Korrelationen im Anschluss sowohl mit absoluten Zahlen als auch prozentueller Verteilung aufgeführt.

    T3-T5(user2): [10.2.12.6: 7, 10.2.12.9: 4] / [10.2.12.6: 64%, 10.2.12.9: 36%]
    T3-T5(user3): [10.2.12.6: 4, 10.2.12.9: 1] / [10.2.12.6: 80%, 10.2.12.9: 20%]
    T3-T7(user3): [10.4.0.5: 5] / [10.4.0.5: 100%]

**Berechnung der Indikatoren (BI in Fig. 1)**

In diesem Bespiel werden die Berechnungen von möglichen Indikatoren beschrieben. Um einen Indikator zu berechnen, können vorteilhafterweise zuvor eine Anzahl an Aktualisierungsschritten durchgeführt werden, um die benötigte Anzahl an Testresultaten zu generieren. Es werden jeweils die Korrelations-Indikatoren $I_K$, Tokenpaar-Indikatoren $I_T$ und der Ereignistyp-Indikator $I_E$ eines Ereignistyps berechnet.

Im folgenden Ausführungsbeispiel werden die Ergebnisse von 10 Aktualisierungsschritten betrachtet. Die Berechnung der Indikatoren basieren auf der folgenden, in Tabelle 4 zusammengefassten, Liste an p-Werten der Tests. Die p-Werte können aus den Teststatistiken berechnet werden, wie in Kusolitsch, N. (2014). Maß- und Wahrscheinlichkeitstheorie: Eine Einführung. Springer-Verlag. beschrieben.

Tabelle 4: Liste an p-Werten der Tests

| Tokenpaar TP | R1 | R2 | R3 | R4 | R5 | R6 | R7 | R8 | R9 | R10 |
|---|---|---|---|---|---|---|---|---|---|---|
| T3-T5(user2) | 0.554 | 0.836 | 0.495 | 0.463 | 0.738 | 0.537 | 0.438 | 0.783 | 0.845 | 0.432 |
| T3-T5(user3) | 0.361 | 0.945 | 0.834 | --- | 0.784 | 0.574 | 0.784 | 0.643 | 0.854 | 0.957 |
| T3-T7(user1) | --- | 1 | 1 | 1 | --- | 1 | 1 | 1 | --- | 1 |
| T3-T7(user2) | 0.022 | 0.035 | 0.031 | 0.073 | 0.094 | 0.064 | 0.054 | 0.025 | 0.043 | 0.063 |
| T3-T7(user3) | 1 | 1 | 1 | 1 | 1 | 1 | 0.072 | 0.034 | 0.053 | 0.062 |

In der Tabelle 4 steht "---" für einen Test bei dem keine Protokollzeilen in der Stichprobe verfügbar sind, und numerische Werte stehen für den p-Wert der berechneten Teststatistik, bzw. wird für einen bestandenen Test, wobei nur ein möglicher Wert in der Korrelation zulässig war, der Wert 1 angenommen.

**Beschreibung des Korrelations-Indikators $I_K$**

Die Berechnung des Korrelations-Indikators $I_K$ erfolgt in diesem Ausführungsbeispiel anhand folgender Formel:

$$I_K = |\overline{M_{Ref}} - \overline{M_{Akt}}|$$

Die zugrundeliegende Idee dieser Berechnung ist es die p-Werte $M_{Ref}$ einer Menge an vorangegangenen Tests, auch Referenz genannt, mit den p-Werten $M_{Akt}$ einer Menge von aktuellen Tests zu vergleichen und einen Wert auszugeben, der angibt, um wie viel sich die Verteilung der Werte unterscheiden.

In diesem Ausführungsbeispiel ist die Menge der Referenz p-Werte die Menge der Teststatistiken der Tests eins bis fünf und die Menge der aktuellen p-Werte die Menge der Teststatistiken der Tests sechs bis zehn. Weiters ist die angewandte Teststatistik die Differenz der Erwartungswerte der Mengen.

Sollte einer der Mengen $M_{Akt}$, oder $M_{Ref}$ leer sein, da keine Protokollzeilen für diese Korrelation in dem Zeitabschnitt eingelesen wurden, wird diese Korrelation nicht getestet.

Um eine Aussage über den berechneten Korrelations-Indikator $I_K$ zu treffen, kann getestet werden, ob der Korrelations-Indikator $I_K$ über einem Schwellwert liegt oder nicht. Der Schwellwert hängt sowohl von der Berechnung des Korrelations-Indikators $I_K$ und der Art der eingelesen Protokollzeilen ab, und kann daher vom Nutzer vorgeben werden oder durch ein anderes Verfahren geschätzt werden. Im dritten Ausführungsbeispiel sei der Schwellwert mit 0.5 angenommen.

Beschreibung des Korrelations-Indikators $I_K$

Im Anschluss werden zu den einzelnen Korrelationen die Korrelations-Indikatoren berechnet.

$$I_{K,T3-T5(user2)} = |\overline{\{0.554, 0.836, 0.495, 0.463, 0.738\}} - \overline{\{0.537, 0.438, 0.783, 0.845, 0.432\}}|$$
$$= |0.617 - 0.607| = 0.010$$

$$I_{K,T3-T5(user3)} = |\overline{\{0.361, 0.945, 0.834, 0.784\}} - \overline{\{0.574, 0.784, 0.643, 0.854, 0.957\}}|$$
$$= |0.731 - 0.762| = 0.031$$

$$I_{K,T3-T7(user1)} = |\overline{\{1, 1, 1\}} - \overline{\{1, 1, 1, 1\}}| = |1 - 1| = 0$$

$$I_{K,T3-T7(user2)} = |\overline{\{0.022, 0.035, 0.031, 0.073, 0.094\}} - \overline{\{0.064, 0.054, 0.025, 0.043, 0.063\}}|$$
$$= |0.051 - 0.050| = 0.001$$

$$I_{K,T3-T7(user3)} = |\overline{\{1, 1, 1, 1, 1\}} - \overline{\{1, 0.072, 0.034, 0.053, 0.062\}}| = |1 - 0.244| = 0.756$$

Da der berechnete Korrelations-Indikator $I_{K,T3-T7(user3)}$ über dem Schwellwert von 0.5 liegt, deutet er auf eine Veränderung im Systemverhalten hin. Ein über dem Schwellenwert liegender Korrelations-Indikator $I_K$ deutet auf eine schwerwiegende Veränderung im Systemverhalten hin und löst damit einen Alarm aus. Dadurch, dass der Alarm mit einer Korrelation assoziiert werden kann, bietet die vorliegende Erfindung außerdem einen Hinweis darauf wo im System die Anomalie aufgetreten ist.

Im Gegensatz zu gängigen Anomalieerkennungsansätzen, die meist punktuelle Ereignisse analysieren, lassen sich mit der vorliegenden Erfindung auch Anomalien erkennen, die eine schleichende Veränderung im Systemverhalten hervorrufen. Außerdem ist es möglich, Angriffe zu erkennen, die zwar Ereignisse, bzw. Protokollzeilen, erzeugen, die sich in ihrer Struktur und Werten nicht von denen des normalen Systemverhaltens unterscheiden, allerdings zu Veränderungen in den statistischen Merkmalen der Verteilungen der Werte führen.

**Beschreibung des Tokenpaar-Indikators $I_{TP}$ und Ereignistyp-Indikators $I_E$**

Die Berechnung des Tokenpaar-Indikators $I_{TP}$ und des Ereignistyp-Indikators $I_E$ werden gemeinsam beschrieben und berechnet, da beide denselben Ansatz zur Berechnung verfolgen. Im Allgemeinen müssen die Formeln nicht identisch sein, bzw. beide Arten von Indikatoren berechnet werden.

Die Berechnung in diesem Ausführungsbeispiel erfolgt anhand folgender Formeln:

$$I_{TP} = \max_{K \in TP}(I_K)$$

$$I_E = \max_{TP \in E} \max_{K \in TP}(I_K)$$

Um eine Aussage über die berechneten Indikatoren $I_{TP}$ und $I_E$ zu treffen, kann analog zum Korrelations-indikator $I_K$ getestet werden, ob die Indikatoren über einem Schwellwert liegen oder nicht. Der Schwellwert hängt dabei sowohl von der Berechnung des Korrelations-Indikators $I_K$, der Berechnung des Tokenpaar-Indikators $I_{TP}$ bzw. Ereignistyp-Indikators $I_E$ und der Art der eingelesen Protokollzeilen ab, und kann daher vom Nutzer vorgegeben werden oder durch ein anderes Verfahren geschätzt werden. Im dritten Ausführungsbeispiel seien die Schwellwerte mit 0.6 für den Tokenpaar-Indikator $I_{TP}$ und 0.65 für den Ereignistyp-Indikator $I_E$ angenommen.

**Beschreibung des Tokenpaar-Indikators $I_{TP}$ und Ereignistyp-Indikators $I_E$**

Im Anschluss werden zuerst die Tokenpaar-Indikatoren $I_{TP}$ und danach der Ereignistyp-Indikator $I_E$ berechnet.

$$I_{TP,T3-T5} = \max\{0.010, 0.031\} = 0.031$$

$$I_{TP,T3-T7} = \max\{0, 0.001, 0.756\} = 0.756$$

$$I_E = \max\{0.031, 0.756\} = 0.756$$

Da der berechnete Tokenpaar-Indikator $I_{TP,T3-T5}$ über dem Schwellwert von 0.6 und der Ereignistyp-Indikator $I_E$ über dem Schwellwert von 0.65 liegt, deutet dies auf eine Veränderung des Systemverhaltens hin. Wie bei den Korrelations-Indikatoren deutet ein Überschreiten der Tokenpaar- und Ereignistyp-Indikatoren der zugehörigen Schwellwerte auf schwerwiegende Veränderungen im Systemverhalten hin und lösen damit Alarme aus. Dadurch, dass ein Alarm mit einer Korrelation assoziiert werden kann, bietet die vorliegende Erfindung außerdem einen Hinweis darauf wo im System eine Anomalie aufgetreten ist.

Im Gegensatz zu gängigen Anomalieerkennungsansätzen, die meist punktuelle Ereignisse analysieren, lassen sich mit der vorliegenden Erfindung auch Anomalien erkennen, die eine schleichende Veränderung im Systemverhalten hervorrufen. Außerdem ist es möglich Angriffe zu erkennen, die zwar Ereignisse, bzw. Protokollzeilen, erzeugen, die sich in ihrer Struktur und Werten nicht von denen des normalen Systemverhaltens unterscheiden, allerdings zu Veränderungen in den statistischen Merkmalen der Verteilungen der Werte führen.

| Token | T |
|---|---|
| Tokenpaar | TP |
| Erster/Zweiter Token eines Tokenpaares | $T_1$, $T_2$ |
| Menge an aktuellen Testresultaten zu einer Korrelation | $M_{Akt}$ |
| Menge an vergangenen Testresultaten zu einer Korrelation | $M_{Ref}$ |
| Korrelations-Indikator | $I_K$ |
| Tokenpaar-Indikator | $I_{TP}$ |
| Ereignistyp-Indikator | $I_E$ |

**Patentansprüche**

1. Verfahren zur Detektion von anomalen Betriebszuständen eines Computersystems,

   - wobei während des Betriebs des Computers oder von auf dem Computer ablaufenden Prozessen, Protokolle erstellt werden, indem bei Auftreten vorgegebener Ereignisse für jedes dieser Ereignisse jeweils eine Protokollzeile in Form einer Zeichenabfolge erstellt wird, wobei der Aufbau der Protokollzeile einer vom jeweiligen Computer und/oder Prozess vorgegebenen Syntax entspricht,
   - wobei die einzelnen Protokollzeilen an vorgegebenen Trennzeichen in Teilzeichenabfolgen unterteilt werden,
   - wobei den einzelnen Protokollzeilen basierend auf deren Syntax, insbesondere aufgrund der Ähnlichkeit der einzelnen Protokollzeilen zueinander und aufgrund der die Protokollzeilen aufbauenden Teilzeichenabfolgen, jeweils zumindest ein Ereignistyp zugewiesen wird,
   - wobei für jeden Ereignistyp ein Template umfassend eine Anzahl von Teilzeichenabfolgen der Protokollzeilen des jeweiligen Ereignistyp repräsentierenden Token (T), erstellt wird,

      - wobei das Template die Struktur der einem jeweiligen Ereignistyp zugeordneten Protokollzeilen beschreibt, und
      - wobei das Template eine Anzahl von Token (T) mit statischem Inhalt, insbesondere statischen Werten, umfasst, die in ihrer Reihenfolge in ausgewählten, insbesondere allen, Protokollzeilen des jeweiligen Ereignistyps vorhanden sind, und wobei die Token (T) mit statischem Inhalt des Templates durch Token (T) mit variablen Inhalt, insbesondere variablen Werten, unterbrochen werden,
- wobei das Template eine Anzahl von Token (T) aufweist, deren Inhalt, insbesondere deren Werte, einen diskreten Datentyp aufweisen, und
- wobei die Protokollzeilen und deren Teilzeichenabfolgen charakteristisch für den Betriebszustand des Computersystems sind,

**dadurch gekennzeichnet,**

- **dass** in einer Initialisierungsphase

- auf Grundlage einer Stichprobe umfassend eine Anzahl an Protokollzeilen des jeweiligen Ereignistyps Tokenpaare (TP) umfassend einen ersten Token ($T_1$) und einen zweiten Token ($T_2$) aus den, den diskreten Datentyp aufweisenden, Token (T) des Templates eines jeweiligen Ereignistyps gebildet werden, wobei als Werte des jeweiligen Tokens (T) jeweils diejenigen Teilzeichenabfolgen der Protokollzeilen der Stichprobe ermittelt werden, die dem jeweiligen Token (T) zugehörig sind, und
- für alle Tokenpaare (TP) und jeden angenommenen Wert des ersten Tokens ($T_1$) des Tokenpaares (TP) jeweils eine Korrelation ermittelt wird, indem die bedingten Verteilungen dafür berechnet werden, dass bei Auftreten des jeweiligen Werts im ersten Token ($T_1$) des Tokenpaares (TP), ein jeweiliger Wert im zweiten Token ($T_2$) des Tokenpaares (TP) auftritt und

- **dass** anschließend in einer Testphase

- wiederholt, sobald eine Abfolge, insbesondere eine vorgegebene Anzahl, neu erstellter Protokollzeilen eines jeweiligen Ereignistyps erstellt wurde, mittels eines Tests auf Homogenität getestet wird, ob die aufgefundenen Korrelationen erfüllt sind, indem jeweils für alle Werte des ersten Tokens ($T_1$) eines jeweiligen Tokenpaares (TP) überprüft wird, ob bei denjenigen neu erstellten Protokollzeilen, bei denen der jeweilige Wert im ersten Token ($T_1$) auftritt, die Werte des zweiten Tokens ($T_2$) den berechneten bedingten Verteilungen der jeweiligen ermittelten Korrelation folgen und
- ein anomaler Betriebszustand des Computersystems erkannt wird, wenn, insbesondere wiederholt, festgestellt wird, dass die Werte der Token (T) zumindest einer der ermittelten Korrelationen nicht den jeweils berechneten bedingten Verteilungen folgen.

2. Verfahren nach Anspruch 1, **dadurch gekennzeichnet, dass** in der Testphase der Chiquadrattest auf Homogenität als Test auf Homogenität verwendet wird.

3. Verfahren nach Anspruch 1 oder 2, **dadurch gekennzeichnet, dass** bei der Bildung der Tokenpaare (TP), die Verteilungen der einzelnen Werte aller Token (T) ermittelt werden und jeweils nur Tokenpaare (TP) aus Token (T) gebildet werden, deren Werte in einem Test auf Homogenität eine ähnliche Verteilung aufweisen.

4. Verfahren nach einem der vorangehenden Ansprüche, **dadurch gekennzeichnet,**

- **dass** bei der Bildung der Tokenpaare (TP) zu jedem Token (T) eine Wertemenge ermittelt wird, wobei die Wertemenge als Werte diejenigen Teilzeichenabfolgen der Protokollzeilen der Stichprobe umfasst, die dem jeweiligen Token (T) zugehörig sind, und
- **dass** jeweils nur Token (T) gepaart werden, bei denen die Werte der jeweiligen Wertemengen einander, insbesondere zu einem vorgegebenen Prozentsatz, überschneiden.

5. Verfahren nach einem der vorangehenden Ansprüche, **dadurch gekennzeichnet, dass** bei der Bildung der Tokenpaare (TP) nur Token (T) berücksichtigt werden, bei denen die Auftrittswahrscheinlichkeit des häufigsten Werts, den diejenigen Teilzeichenabfolgen der Protokollzeilen in der Stichprobe annehmen, die dem jeweiligen Token (T) zugehörig sind, einen vorgegebenen Schwellwert überschreitet.

6. Verfahren nach einem der vorangehenden Ansprüche, **dadurch gekennzeichnet,**

- **dass** in der Initialisierungsphase die einzelnen ermittelten Korrelationen zu den einzelnen Tokenpaaren (TP) in einem Überprüfungsschritt dahingehend überprüft werden, ob die jeweils ermittelten Korrelationen vorgegebene Bedingungen erfüllen, welche einem Test entsprechen, ob die einzelnen ermittelten Korrelationen nicht zufällig sind, und
- **dass** in der Testphase nur diejenigen ermittelten Korrelationen berücksichtigt werden, die diese vorgegebenen Bedingungen erfüllen, indem sie in der jeweiligen Überprüfung als nicht zufällig erkannt werden.

7. Verfahren nach Anspruch 6, **dadurch gekennzeichnet, dass**, im Fall, dass im Überprüfungsschritt mehrere verschiedene Überprüfungen der Korrelationen hintereinander vorgenommen werden, nur diejenigen Korrelationen in der Testphase berücksichtigt werden, die in zumindest einer Überprüfung, insbesondere allen Überprüfungen, als nicht zufällig erkannt wurden.

8. Verfahren nach Anspruch 6 oder 7, **dadurch gekennzeichnet,**

- **dass** im Überprüfungsschritt die Korrelationen überprüft werden, indem mittels eines goodness of fit-Tests getestet wird, ob die angenommene Werte des zweiten Tokens ($T_2$), des jeweiligen Tokenpaares (TP) in den Protokollzeilen der Stichprobe welche dem der Korrelation zugehörigen Wert im ersten Token ($T_1$) besitzen, aus der Multinomialverteilung entstammen, in der das Auftreten aller Werte gleich wahrscheinlich ist und
- **dass** die jeweilige Korrelation diese Überprüfung bestanden hat und als nicht zufällig erkannt wird, wenn der goodness of fit-Test negativ ist.

9. Verfahren nach einem der Ansprüche 6 bis 8, **dadurch gekennzeichnet,**

- **dass** im Überprüfungsschritt zu den Korrelationen eines Tokenpaares (TP) jeweils die bedingten Verteilungen der Werte der zweiten Token ($T_2$) des jeweiligen Tokenpaares (TP) in der Stichprobe annimmt, mittels eines Tests auf Homogenität, überprüft werden, ob diese derselben Verteilung angehören, und
- **dass**, sollte der Test auf Homogenität positiv ausfallen, alle Korrelationen dieses Tokenpaares (TP) die Überprüfung nicht bestanden haben und als zufällig erkannt werden.

10. Verfahren nach einem der Ansprüche 6 bis 9, **dadurch gekennzeichnet,**

- **dass** im Überprüfungsschritt die Korrelationen überprüft werden, indem

- die Häufigkeiten der Werte des ersten Tokens ($T_1$) des Tokenpaares (TP) ermittelt werden und
- die Häufigkeiten derjenigen Werte des ersten Tokens ($T_1$) aggregiert, insbesondere summiert, werden, für welche Korrelationen ermittelt wurden, und

- **dass** alle Korrelationen des Tokenpaares (TP) die Überprüfung nicht bestanden haben und als zufällig erkannt werden, wenn der derart berechnete aggregierte Wert, insbesondere die derart berechnete Summe, einen vorgegebenen Schwellenwert unterschreitet.

11. Verfahren nach einem der vorangehenden Ansprüche, **dadurch gekennzeichnet, dass** in der Testphase zum Testen der Korrelationen die Korrelationen, insbesondere nur dann wenn das Testresultat positiv war, aktualisiert werden, indem für die Korrelationen die bedingten Verteilungen, die auf Basis von jeweiligen Stichproben festgelegt wurden, auf Basis dieser Stichprobe zuzüglich der Stichprobe dieses Updateschrittes festgelegt werden.

12. Verfahren nach einem der vorangehenden Ansprüche, **dadurch gekennzeichnet, dass**, insbesondere mittels eines Binomialtests, ermittelt wird, ob sich die negativen Testresultate einer jeweiligen Korrelation häufen und dass die jeweilige Korrelation verworfen wird, sofern dies der Fall ist.

13. Verfahren nach einem der vorangehenden Ansprüche, **dadurch gekennzeichnet, dass** neue Korrelationen gesucht werden, indem in der Testphase, insbesondere regelmäßig, einzelne Tokenpaare (TP), für die zuvor keine Korrelationen gefunden wurden, oder deren Korrelationen verworfen wurden, einer neuerlichen Initialisierungsphase unterworfen werden, und dass die derart aufgefundenen neuen Korrelationen anschließend in der Testphase getestet werden.

14. Verfahren nach einem der vorangehenden Ansprüche, **dadurch gekennzeichnet, dass** zu den einzelnen Korrelationen, basierend auf einem Vergleich eines Abschnittes einer Liste der letzten Testresultate der Aktualisierungen der Korrelationen ($M_{Akt}$) und einem, als Referenz dienenden, vergangenen Abschnitt der Liste der letzten Testresultate der Aktualisierungen der Korrelationen ($M_{Ref}$), jeweils ein Korrelations-Indikator ($I_K$) berechnet wird, der die Wahrscheinlichkeit dafür angibt, dass die jeweils zuletzt neu erstellten Protokollzeilen von der jeweiligen Korrelation abgewichen sind.

**15.** Verfahren nach Anspruch 14, **dadurch gekennzeichnet, dass** für die Berechnung der Indikatoren zusätzlich zu den Testresultaten, die bei den Tests ermittelten p-Werte für die Berechnung des Indikators herangezogen werden.

**16.** Verfahren nach einem der Ansprüche 14 oder 15, **dadurch gekennzeichnet, dass** alle Korrelations-Indikatoren ($I_K$) eines Tokenpaares (TP) zu einem Tokenpaar-Indikator ($I_T$) zusammengefasst werden und/oder alle Korrelations-Indikatoren ($I_K$) eines Ereignistyps zu einem Ereignistyp-Indikator ($I_E$) zusammengefasst werden,
wobei der Tokenpaar-Indikator ($I_T$) und der Ereignistyp-Indikator ($I_E$) jeweils die Wahrscheinlichkeiten dafür angeben, dass die jeweils zugrundeliegenden Protokollzeilen von einer der zusammengefassten Korrelationen abgewichen sind.

**17.** Verfahren nach einem der vorangehenden Ansprüche, **dadurch gekennzeichnet,**

- **dass** in der Initialisierungsphase Ereignistypen ermittelt werden, deren Protokollzeilen in einem vorgegebenen zeitlichen Abstand zueinander, insbesondere unmittelbar nacheinander, vom Computersystem erstellt werden, und
- **dass** Tokenpaare (TP) erstellt werden, die jeweils einen, einen diskreten Datentyp aufweisenden, Token (T) von verschiedenen der derart ermittelten Ereignistypen umfassen.

**18.** Datenträger, auf dem ein Programm zur Durchführung eines Verfahrens nach einem der vorangehenden Ansprüche abgespeichert ist.

## Claims

**1.** Method for detecting abnormal operating states of a computer system,

- wherein during the operation of the computer or of processes running on the computer, logs are created when predefined events occur by creating a log line in the form of a character string for each of these events, wherein the structure of the log line corresponds to a syntax predefined by the respective computer and/or process,
- wherein the individual log lines are divided into partial character strings at predefined separators,
- wherein at least one event type is assigned to each of the individual log lines based on their syntax, in particular on the basis of the similarity of the individual log lines to one another and on the basis of the partial character strings constituting the log lines,
- wherein for each event type a template comprising a number of partial character strings of the log lines of the token (T) representing the respective event type is created,

  - wherein the template describes the structure of the log lines associated with a respective event type, and
  - wherein the template comprises a number of tokens (T) with static content, in particular static values, which are present in their order in selected, in particular all, log lines of the respective event type, and wherein the tokens (T) with static content of the template are interrupted by tokens (T) with variable content, in particular variable values,
  - wherein the template comprises a number of tokens (T) whose content, in particular whose values, have a discrete data type, and

- wherein the log lines and their partial character strings are characteristic of the operating state of the computer system,

**characterised in that**

- in an initialisation phase

  - on the basis of a sample comprising a number of log lines of the respective event type, token pairs (TP) comprising a first token ($T_1$) and a second token ($T_2$) are formed from the tokens (T), having the discrete data type, of the template of a respective event type,
  wherein, as values of the respective token (T), those partial character strings of the log lines of the sample are determined which belong to the respective token (T), and

- a correlation is determined for all token pairs (TP) and each assumed value of the first token ($T_1$) of the token pair (TP) in each case by calculating the conditional distributions for ensuring that when the respective value occurs in the first token ($T_1$) of the token pair (TP), a respective value occurs in the second token ($T_2$) of the token pair (TP), and

- **in that** subsequently in a test phase

- as soon as a string, in particular a predefined number, of newly created log lines of a respective event type has been created, it is repeatedly tested by means of a test for homogeneity whether the correlations found are fulfilled by checking in each case for all values of the first token ($T_1$) of a respective token pair (TP) whether, in the case of those newly created log lines in which the respective value occurs in the first token ($T_1$), the values of the second token ($T_2$) follow the calculated conditional distributions of the respective correlation determined, and
- an abnormal operating state of the computer system is identified when it is established, in particular repeatedly, that the values of the tokens (T) of at least one of the determined correlations do not follow the conditional distributions calculated in each case.

2. Method according to claim 1, **characterised in that** in the test phase the chi-squared test for homogeneity is used as the test for homogeneity.

3. Method according to claim 1 or 2, **characterised in that** during the formation of the token pairs (TP), the distributions of the individual values of all tokens (T) are determined and in each case only token pairs (TP) are formed from tokens (T) whose values have a similar distribution in a test for homogeneity.

4. Method according to any of the preceding claims, **characterised in that**

- during the formation of the token pairs (TP), a value set is determined for each token (T), wherein the value set comprises as values those partial character strings of the log lines of the sample which belong to the respective token (T), and
- **in that** in each case only tokens (T) are paired in which the values of the respective value sets overlap one another, in particular to a predefined percentage.

5. Method according to any of the preceding claims, **characterised in that**, during the formation of the token pairs (TP), only tokens (T) are taken into account for which the probability of occurrence of the most frequent value assumed by those partial character strings of the log lines in the sample which belong to the respective token (T), exceeds a predefined threshold value.

6. Method according to any of the preceding claims, **characterised in that**

- in the initialisation phase, the individual determined correlations for the individual token pairs (TP) are checked in a checking step as to whether the correlations determined in each case fulfil predefined conditions which correspond to a test of whether the individual determined correlations are non-random, and
- **in that** in the test phase only those determined correlations are taken into account that fulfil these predefined conditions by being identified as non-random in the respective check.

7. Method according to claim 6, **characterised in that**, in the event that several different checks of the correlations are carried out in succession in the checking step, only those correlations are taken into account in the test phase which were identified as non-random in at least one check, in particular all checks.

8. Method according to claim 6 or 7, **characterised in that**

- in the checking step, the correlations are checked by testing, by means of a goodness of fit test, whether the assumed values of the second token ($T_2$), of the respective token pair (TP) in the log lines of the sample which have in the first token ($T_1$) the value belonging to the correlation, originate from the multinomial distribution in which the occurrence of all values is equally probable, and
- **in that** the respective correlation has passed this check and is identified as non-random if the goodness of fit test is negative.

9. Method according to any of claims 6 to 8, **characterised in that**

- in the checking step for the correlations of a token pair (TP), the conditional distributions of the values of the second tokens ($T_2$) of the respective token pair (TP) in the sample are in each case assumed, by means of a test for homogeneity, are checked as to whether these belong to the same distribution, and
- **in that** if the test for homogeneity is positive, all correlations of this token pair (TP) have failed the check and are identified as random.

10. Method according to any of claims 6 to 9, **characterised in that**

- in the checking step, the correlations are checked by

- determining the frequencies of the values of the first token ($T_1$) of the token pair (TP) and
- aggregating, in particular summing, the frequencies of those values of the first token ($T_1$) for which correlations have been determined, and

- **in that** all correlations of the token pair (TP) have failed the check and are identified as random if the aggregated value thus calculated, in particular the sum thus calculated, falls below a predefined threshold value.

11. Method according to any of the preceding claims, **characterised in that** in the test phase for testing the correlations, the correlations are updated, in particular only if the test result was positive, by setting for the correlations the conditional distributions which were set on the basis of respective samples, on the basis of this sample plus the sample of this update step.

12. Method according to any of the preceding claims, **characterised in that** it is determined, in particular by means of a binomial test, whether the negative test results of a respective correlation are accumulated and **in that** the respective correlation is rejected if this is the case.

13. Method according to any of the preceding claims, **characterised in that** new correlations are searched for by subjecting in the test phase, in particular regularly, individual token pairs (TP) for which no correlations were previously found, or whose correlations were rejected, to a new initialisation phase, and **in that** the new correlations thus found are subsequently tested in the test phase.

14. Method according to any of the preceding claims, **characterised in that**, for the individual correlations, based on a comparison of a section of a list of the last test results of the updates to the correlations ($M_{Akt}$) and a past section, serving as a reference, of the list of the last test results of the updates to the correlations ($M_{Ref}$), in each case a correlation indicator ($I_K$) is calculated which indicates the probability that the most recently newly created log lines in each case have deviated from the respective correlation.

15. Method according to claim 14, **characterised in that** for the calculation of the indicators, in addition to the test results, the p-values determined in the tests are used for the calculation of the indicator.

16. Method according to any of claims 14 or 15, **characterised in that** all correlation indicators ($I_K$) of a token pair (TP) are combined to form a token pair indicator ($I_T$) and/or all correlation indicators ($I_K$) of an event type are combined to form an event type indicator ($I_E$), wherein the token pair indicator ($I_T$) and the event type indicator ($I_E$) each indicate the probabilities that the respective underlying log lines have deviated from one of the combined correlations.

17. Method according to any of the preceding claims, **characterised in that**

- in the initialisation phase, event types are determined whose log lines are created by the computer system at a predefined time interval from one another, in particular immediately one after the other, and
- **in that** token pairs (TP) are created which each comprise a token (T), having a discrete data type, of different event types of those determined in this way.

18. Data carrier on which a program for carrying out a method according to any of the preceding claims is stored.

**Revendications**

1. Procédé de détection d'états de fonctionnement anormaux d'un système informatique,

   - dans lequel, pendant le fonctionnement de l'ordinateur ou de processus se déroulant sur l'ordinateur, des protocoles sont établis en ce que, lors de l'apparition d'événements prédéterminés, une ligne de protocole est établie pour chacun de ces événements sous la forme d'une séquence de caractères, dans lequel la structure de la ligne de protocole correspond à une syntaxe prédéterminée par l'ordinateur et/ou le processus respectif,
   - dans lequel les lignes de protocole individuelles sont subdivisées en séquences de caractères partielles au niveau de caractères de séparation prédéterminés,
   - dans lequel au moins un type d'événement est attribué aux lignes de protocole individuelles sur la base de leur syntaxe, en particulier sur la base de la similitude des lignes de protocole individuelles entre elles et sur la base des séquences de caractères partielles constituant les lignes de protocole,
   - dans lequel un modèle comprenant un certain nombre de séquences de caractères partielles des lignes de protocole du jeton (T) représentant le type d'événement respectif est créé pour chaque type d'événement,

     - dans lequel le modèle décrit la structure des lignes de protocole attribuées à un type d'événement respectif et
     - dans lequel le modèle comprend un certain nombre de jetons (T) à contenu statique, en particulier des valeurs statiques, qui sont présents dans leur ordre dans des lignes de protocole sélectionnées, en particulier toutes, du type d'événement respectif, et dans lequel les jetons (T) à contenu statique du modèle sont interrompus par des jetons (T) à contenu variable, en particulier des valeurs variables,
     - dans lequel le modèle présente un certain nombre de jetons (T) dont le contenu, en particulier les valeurs, présentent un type de données discret, et

   - dans lequel les lignes de protocole et leurs séquences de caractères partielles sont caractéristiques de l'état de fonctionnement du système informatique,

   **caractérisé en ce**

     - **que** dans une phase d'initialisation

       - sur la base d'un échantillon aléatoire comprenant un certain nombre de lignes de protocole du type d'événement respectif, des paires de jetons (TP) comprenant un premier jeton ($T_1$) et un deuxième jeton ($T_2$) sont formées à partir des jetons (T) du modèle d'un type d'événement respectif, qui présente le type de données discret,
       dans lequel ces séquences de caractères partielles des lignes de protocole de l'échantillon aléatoire qui appartiennent au jeton respectif (T) sont déterminées comme des valeurs du jeton respectif (T), et
       - une corrélation est déterminée pour toutes les paires de jetons (TP) et chaque valeur supposée du premier jeton ($T_1$) de la paire de jetons (TP) en calculant les distributions conditionnelles pour l'occurrence de la valeur respective dans le premier jeton ($T_1$) de la paire de jetons (TP), une valeur respective apparaît dans le deuxième jeton ($T_2$) de la paire de jetons (TP) et

     - **qu'**ensuite, dans une phase de test,

       - à plusieurs reprises, dès qu'une séquence, en particulier un nombre prédéterminé, de lignes de protocole nouvellement créées d'un type d'événement respectif, a été créée, un test d'homogénéité est utilisé pour tester si les corrélations trouvées sont remplies, en ce que pour toutes les valeurs du premier jeton ($T_1$) d'une paire de jetons respective (TP), il est contrôlé si les valeurs du deuxième jeton ($T_2$) suivent les distributions conditionnelles calculées de la corrélation déterminée respective dans les lignes de protocole nouvellement créées dans lesquelles la valeur respective apparaît dans le premier jeton ($T_1$) et
       - un état de fonctionnement anormal du système informatique est détecté s'il est déterminé, en particulier à plusieurs reprises, que les valeurs des jetons (T) d'au moins une des corrélations déterminées ne suivent pas les distributions conditionnelles respectivement calculées.

2. Procédé selon la revendication 1, **caractérisé en ce que** dans la phase de test, le test d'homogénéité du chi carré est utilisé comme test d'homogénéité.

**3.** Procédé selon la revendication 1 ou 2, **caractérisé en ce que** lors de la formation des paires de jetons (TP), les distributions des valeurs individuelles de tous les jetons (T) sont déterminées et respectivement seules les paires de jetons (TP) sont formées à partir des jetons (T) dont les valeurs présentent une distribution similaire dans un test d'homogénéité.

**4.** Procédé selon l'une quelconque des revendications précédentes, **caractérisé en ce**

- **que**, lors de la formation des paires de jetons (TP), une quantité de valeurs est déterminée pour chaque jeton (T), dans lequel la quantité de valeurs comprend comme valeurs les séquences de caractères partielles des lignes de protocole de l'échantillon aléatoire qui appartiennent au jeton respectif (T), et
- **que** respectivement seuls des jetons (T) sont appariés dans lesquels les valeurs des quantités de valeurs respectives se chevauchent, en particulier d'un pourcentage prédéterminé.

**5.** Procédé selon l'une quelconque des revendications précédentes, **caractérisé en ce que** lors de la formation des paires de jetons (TP), seuls les jetons (T) sont pris en compte pour lesquels la probabilité d'occurrence de la valeur la plus fréquente prise par ces séquences partielles de caractères des lignes de protocole dans l'échantillon aléatoire qui correspondent au jeton respectif (T) sont associées dépasse une valeur seuil prédéterminée.

**6.** Procédé selon l'une quelconque des revendications précédentes, **caractérisé en ce**

- **que**, dans la phase d'initialisation, les corrélations déterminées individuellement pour les paires de jetons individuelles (TP) sont contrôlées dans une étape de contrôle pour déterminer si les corrélations respectivement déterminées remplissent des conditions prédéterminées, lesquelles correspondent à un test pour savoir si les corrélations déterminées individuellement ne sont pas aléatoires, et
- **que** dans la phase de test, seules les corrélations déterminées qui remplissent ces conditions prédéterminées sont prises en compte en étant reconnues comme non aléatoires dans le contrôle respectif.

**7.** Procédé selon la revendication 6, **caractérisé en ce que**, dans le cas où plusieurs contrôles différents des corrélations sont effectués successivement dans l'étape de contrôle, seules sont prises en compte dans la phase de test les corrélations qui ont été reconnues comme non aléatoires à au moins un contrôle, en particulier tous les contrôles.

**8.** Procédé selon la revendication 6 ou 7, **caractérisé en ce**

- **que** les corrélations sont contrôlées dans l'étape de contrôle en utilisant un test d'adéquation pour tester si les valeurs supposées du deuxième jeton ($T_2$) de la paire de jetons respective (TP) dans les lignes de protocole de l'échantillon aléatoire, lesquelles correspondent à la valeur associée à la corrélation dans le premier jeton ($T_1$), proviennent de la distribution multinomiale, dans laquelle l'occurrence de toutes les valeurs est également probable et
- **que** la corrélation respective a réussi ce contrôle et est reconnue comme non aléatoire si le test d'adéquation est négatif.

**9.** Procédé selon l'une quelconque des revendications 6 à 8, **caractérisé en ce**

- **que**, dans l'étape de contrôle des corrélations d'une paire de jetons (TP), les distributions conditionnelles des valeurs du deuxième jeton ($T_2$) de la paire de jetons respective (TP) dans l'échantillon aléatoire sont contrôlées au moyen d'un test d'homogénéité, pour déterminer s'ils appartiennent à la même distribution, et
- **que** si le test d'homogénéité est positif, toutes les corrélations de cette paire de jetons (TP) ont échoué au contrôle et sont reconnues comme aléatoires.

**10.** Procédé selon l'une quelconque des revendications 6 à 9, **caractérisé en ce**

- **que** les corrélations sont contrôlées dans l'étape de vérification, en ce

  - **que** les fréquences des valeurs du premier jeton ($T_1$) de la paire de jetons (TP) sont déterminées et
  - les fréquences de ces valeurs du premier jeton ($T_1$) sont agrégées, en particulier additionnées, pour lesquelles des corrélations ont été déterminées, et

- **que** toutes les corrélations de la paire de jetons (TP) n'ont pas réussi le contrôle et sont reconnues comme aléatoires si la valeur agrégée ainsi calculée, en particulier la somme ainsi calculée, tombe sous une valeur seuil prédéterminée.

11. Procédé selon l'une quelconque des revendications précédentes, **caractérisé en ce que** dans la phase de test pour tester les corrélations, les corrélations sont mises à jour, en particulier seulement si le résultat du test était positif, par les distributions conditionnelles pour les corrélations, qui ont été déterminées sur la base d'échantillons aléatoires respectifs, sur la base de cet échantillon aléatoire plus l'échantillon aléatoire de cette étape de mise à jour.

12. Procédé selon l'une quelconque des revendications précédentes, **caractérisé en ce qu'**il est déterminé, en particulier au moyen d'un test binomial, si les résultats de test négatifs d'une corrélation respective s'accumulent et que la corrélation respective est rejetée si tel est le cas.

13. Procédé selon l'une quelconque des revendications précédentes, **caractérisé en ce que** de nouvelles corrélations sont recherchées en soumettant des paires de jetons individuelles (TP) pour lesquelles aucune corrélation n'a été précédemment trouvée ou dont les corrélations ont été rejetées à une nouvelle phase d'initialisation dans la phase de test, en particulier régulièrement, et que les nouvelles corrélations ainsi trouvées sont ensuite testées dans la phase de test.

14. Procédé selon l'une quelconque des revendications précédentes, **caractérisé en ce que** pour les corrélations individuelles, sur la base d'une comparaison d'une section d'une liste des derniers résultats de test des mises à jour des corrélations ($M_{Akt}$) et, servant de référence, de la section passée de la liste des derniers résultats de test des mises à jour des corrélations ($M_{Ref}$), un indicateur de corrélation ($I_K$) est respectivement calculé, qui indique la probabilité que les dernières lignes de protocole nouvellement créées ont dévié de la corrélation respective.

15. Procédé selon la revendication 14, **caractérisé en ce que** pour le calcul des indicateurs, les valeurs p déterminées dans les tests sont utilisées pour le calcul de l'indicateur en plus des résultats des tests.

16. Procédé selon l'une quelconque des revendications 14 ou 15, **caractérisé en ce que** tous les indicateurs de corrélation ($I_K$) d'une paire de jetons (TP) sont abrégés en un indicateur de paire de jetons ($I_T$) et/ou tous les indicateurs de corrélation ($I_K$) d'un type d'événement sont abrégés en un seul indicateur de type d'événement ($I_E$), dans lequel l'indicateur de paire de jetons ($I_T$) et l'indicateur de type d'événement ($I_E$) indiquent chacun les probabilités que les lignes de protocole sousjacentes respectives ont dévié de l'une des corrélations abrégées.

17. Procédé selon l'une quelconque des revendications précédentes, **caractérisé en ce**

   - **que**, dans la phase d'initialisation, des types d'événements sont déterminés dont les lignes de protocole sont créées par le système informatique à un intervalle de temps prédéterminé, en particulier immédiatement l'un après l'autre, et
   - **que** des paires de jetons (TP) sont créées, qui comprennent chacune un jeton (T) présentant un type de données discret à partir de différents types d'événements ainsi déterminés.

18. Support de données sur lequel un programme est enregistré pour la mise en œuvre d'un procédé selon l'une quelconque des revendications précédentes.

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 19169705
- EP 504612018 A
- EP 3267625 A
- EP 506012016 A
- EP 502852019 A
- EP 20160854
- AT 506422020 A


**In der Beschreibung aufgeführte Nicht-Patentliteratur**

- System log clustering approaches for cyber security applications: A survey. **LANDAUER MAX et al.** COMPUTERS & SECURITY. ELSEVIER SCIENCE PUBLISHERS, 31. Januar 2020, vol. 92
- **PARK, K. I. ; PARK.** Fundamentals of Probability and Stochastic Processes with Applications to Communications. Springer International Publishing, 2018
- **BOLBOACA, S. D.; JÄNTSCHI, L.; SESTRAS, A. F.; SESTRAS, R. E.; PAMFIL, D. C.** Pearson-Fisher chi-square statistic revisited. *Information,* 2011, vol. 2 (3), 528-545
- **ZHANG, J.** Powerful goodness-of-fit tests based on the likelihood ratio. *Journal of the Royal Statistical Society: Series B (Statistical Methodology),* 2002, vol. 64 (2), 281-294
- Tracking differential evolution algorithms: An adaptive approach through multinomial distribution tracking with exponential forgetting. **EPITROPAKIS, M. G. ; TASOULIS, D. K. ; PAVLIDIS, N. G. ; PLAGIANAKOS, V. P. ; VRAHATIS, M. N.** Hellenic Conference on Artificial Intelligence. Springer, Mai 2012, 214-222
- **HENZE, N.** *Stochastik für Einsteiger,* 1997, vol. 8
- AECID-PG: A Tree-Based Log Parser Generator To Enable Log Analysis. **WURZENBERGER, M. ; LANDAUER, M. ; SKOPIK, F. ; KASTNER, W.** 2019 IFIP/IEEE Symposium on Integrated Network and Service Management (IM). IEEE, April 2019, 7-12
- AECID-PG: A Tree-Based Log Parser Generator To Enable Log Analysis. **WURZENBERGER, M. ; LANDAUER, M. ; SKOPIK, F. ; KASTNER, W.** 2019 IFIP/IEEE Symposium on Integrated Network and Service Management (IM). IEEE, April 2019, 7-12
- **KUSOLITSCH, N.** Maß- und Wahrscheinlichkeitstheorie: Eine Einführung. Springer-Verlag, 2014